(19) Europäisches Patentamt
European Patent Office
Office européen des brevets

(11) **EP 4 050 696 A1**

(12) **EUROPEAN PATENT APPLICATION**

(43) Date of publication:
**31.08.2022 Bulletin 2022/35**

(21) Application number: **21159782.8**

(22) Date of filing: **26.02.2021**

(51) International Patent Classification (IPC):
*H01M 10/42* (2006.01)    *H01M 10/48* (2006.01)

(52) Cooperative Patent Classification (CPC):
**H01M 10/488; H01M 10/425;** H01M 2010/4278

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dukosi Limited
Edinburgh, EH14 4AP (GB)**

(72) Inventors:
• **Jones, Adrian
Edinburgh, EH14 4AP (GB)**

• **Sylvester, Joel
Edinburgh, EH14 4AP (GB)**
• **Crymble, Tim
Edinburgh, EH14 4AP (GB)**
• **Leworthy, Josh
Edinburgh, EH14 4AP (GB)**
• **Ballany, Ross
Edinburgh, EH14 4AP (GB)**

(74) Representative: **Finnegan Europe LLP
1 London Bridge
London SE1 9BG (GB)**

(54)    **BATTERY CELL POSITION DETERMINATION**

(57)    A method of and processor for determining a position of a battery cell within a battery system comprising a plurality of battery cells, each battery cell having a unique identifier (ID) is provided. Each battery cell is configured to emit a first signal when in a first state, the first signal enabling the battery cell in the first state to be distinguished from the plurality of other battery cells comprised in the battery system. The method may comprise: receiving a first signal associated with a battery cell in the first state; obtaining the unique ID associated with the battery cell in the first state; determining the position of the battery cell in the first state within the battery system, based on the received first signal associated with the battery cell in the first state; and associating the determined position with the received unique ID of the battery cell in the first state.

```
                                          ⟋ 200

            ( Start )

210 ─  Receive a first signal associated with a
       battery cell in a first state

220 ─  Obtain a unique ID associated with
       the battery cell in the first state

230 ─  Determine a position of the battery cell
       in the first state within the battery
       system based on the received first
       signal associated with the battery cell
       in the first state

240 ─  Associate the determined position
       with the received unique ID of the
       battery cell in the first state

            ( End )
```

**FIG. 2**

**Description**

Technical Field

The present disclosure relates to the field of battery technology and energy cells and discloses solutions for determining a position of a battery cell within a battery system comprising a plurality of battery cells. In particular, embodiments of the disclosure relate to a method and a system for determining a position of a battery cell within a battery system comprising a plurality of battery cells.

Background

Battery systems, comprising a plurality of battery cells, are used in a wide range of modern electric power applications. For example, they are used to power electric vehicles, they are used in industrial power applications, in transportation, and in commercial applications such as powering of modern electronic devices. Given the relatively high-power demands of such applications, a battery system often comprises a plurality of battery cells coupled together to achieve the required power output. The battery cells may be coupled together to form a battery pack, and the battery system may comprise one or more battery packs.

It is common to connect a battery system to a battery management system (BMS), configured to ensure that the battery system operates within its safe operating area. The safe operating area is defined as the voltage and current conditions under which the battery system is expected to operate without self-damage. For further details, the interested reader is directed to the following Wikipedia website: https://en.wikipedia.org/wiki/Battery management system.

In certain known applications, performance characteristics of the battery cells within the battery system may be monitored, to identify potentially faulty operation of cells within the battery system before a catastrophic fault occurs. The severity of the potential fault may be dependent on the position of the associated cell within the battery system. This is particularly true where the fault is associated with overheating, or a leak of battery fluids or gas. Depending on the position of the cell within the battery system, the fault may potentially provoke a catastrophic chain reaction. For example, an overheating cell located centrally within a battery system, in contact with adjacent cells on all its surfaces, poses a greater risk of causing a chain reaction, than an overheating cell located near a corner of the battery system in physical contact with a single cell. It is therefore important to know the relative positions of the battery cells comprised within a battery system, to better assess the gravity of an identified potential fault in a battery cell.

As a safety precaution, since it is not always known how to determine the position of individual cells in a battery system, and the position of a faulty cell, it is common to replace the entire battery system, when a fault is identified in a battery cell within the battery system. This often also results in some individual cells within the battery system, which are otherwise functional, and operating normally, to be discarded. This results in significant waste of functional cells, due to the inability to determine the locations of individual cells within the battery system.

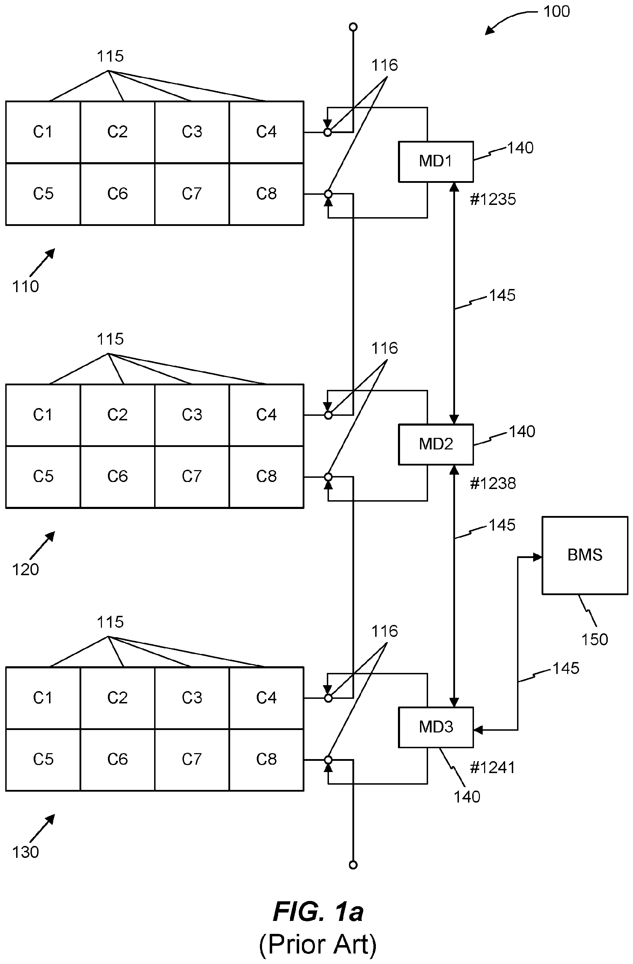

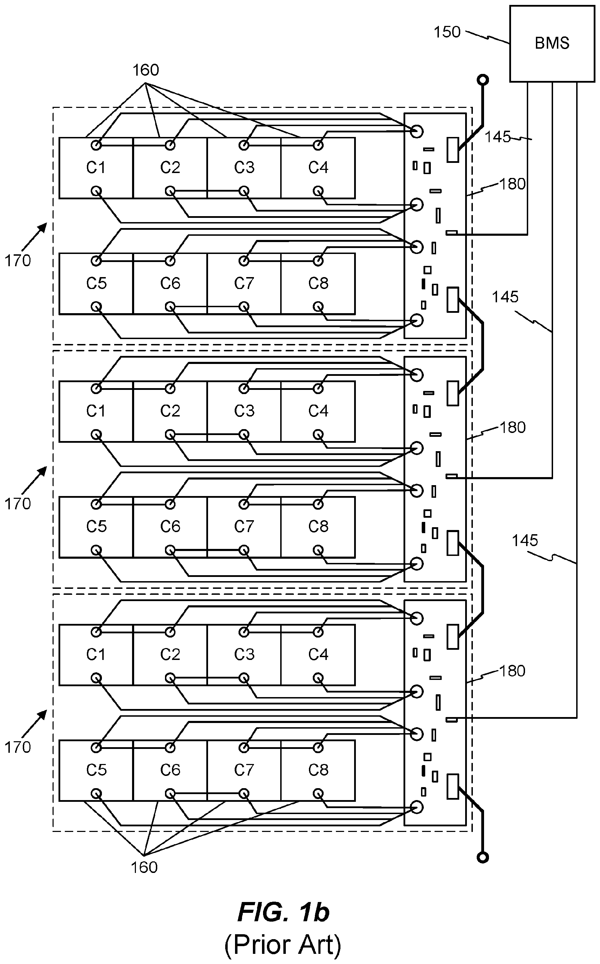

Fig. 1a is a schematic illustration of a known prior art battery system 100, comprising a plurality of battery packs 110, 120, 130. Each pack comprises a plurality of battery cells 115. The cells 115 within each battery pack 110, 120, 130 are commonly connected in series, and each battery pack 110, 120, 130 comprises terminals 116, enabling electrical power to be drawn from the battery pack. In Fig. 1a battery packs 110, 120, 130 are connected to each other in series. Each battery pack 110, 120, 130 may comprise a measuring device (MD) 140, configured to measure performance characteristics of the associated battery pack 110, 120, 130. MD 140 may be arranged to be powered by its respective battery pack 110, 120, 130. In Fig. 1, designations MD1, MD2, and MD3 are used to distinguish between measurement devices 140 coupled to each battery pack 110, 120, 130, and are coupled in series (daisy chained) forming communication channel 145 terminating at battery management system (BMS) 150.

In the prior art systems of Fig. 1a, the problem of identifying the origin of measurement data received by the BMS 150, can be solved based on the hierarchical relationship between nodes present on shared communication channel 145 with BMS 150. To illustrate this, consider an example where BMS 150 is operatively connected to MD3 via shared communication channel 145, as illustrated. To determine the hierarchical configuration of MDs 140, BMS 150 queries the unique ID of the measurement device 140 that is directly connected to it - namely, MD3. MD3 responds to BMS 150 providing its unique ID #1241. BMS 150 now knows the unique ID of MD3 that is directly connected to it. BMS 150 may subsequently ask MD3 to obtain the unique ID of the next measurement device 140 directly connected to MD3 - namely, the unique ID of MD2. MD2 responds to MD3's request by providing its unique ID #1238 to MD3, which is subsequently forwarded to BMS 150. BMS 150 now knows the unique ID of MD2, and knows that MD2 is operatively connected in series to MD3. BMS 150 may subsequently query MD2, via MD3, for the unique ID of any measurement device 140 that is connected in series to MD2. In a similar way as was done by MD3, MD2 queries MD1 for its unique ID, #1235, which is forwarded to BMS 150. In this way BMS 150 is able to determine the communication hierarchy of all measurement devices 140 connected in series within battery system 100, which is defined by the order in which they are physically connected to BMS 150. BMS 150 is able to communicate with any one of MDs 140 within battery system 100 using the associated MDs unique ID. It is to be appreciated that each MD 140 occupies a different level in the communication hierarchy. Each MD 140 is only able to communicate directly with its adjacent MDs 140, except where the subject MD 140 is adjacent to BMS 150. For a given MD 140, for example MD1, communication with BMS 150 requires using the intervening MDs 140 lying along communication channel 145 between MD1 and BMS 150 as proxies.

A shortcoming of the prior art system of Fig. 1a is that it does not enable BMS 150 or MD 140 to determine the position of individual battery cells 115 within a battery pack 110, 120, 130. In particular, neither BMS 150 or MD 140 is able to associate battery cell data received from specific battery cells 115, with the position of the specific battery cell. For example, for a given battery pack 110, it is not possible for MD1 to determine the position of battery cell C7. Thus, once a potential fault is identified with a battery cell within a battery pack from received measurement data, the entire battery associated with the faulty battery cell is still replaced in its entirety.

Fig. 1b illustrates another known prior art system, in which each battery cell 160 within battery pack 170, is hardwired to MD 180. The position of each cell C1-C12 within battery pack 170 may be mapped during assembly of battery pack 170. In use, MD 180 receives measurement data from each one of cells C1-C12, and can determine the source of the received measurement data based on the pre-defined cell mapping information. MDs 180 illustrated in Fig. 1b may be connected in series in a similar manner as described in relation to the prior art system of Fig, 1a. Alternatively, each MD 180 may be directly connected to BMS via a direct wired connection. Such configurations are advantageous since there is no communication hierarchy imposed on BMS 150, and instead communication with each MD 180 is by direct wired connection without use of any proxies. During battery pack assembly, the position of each pack 170, each battery cell C1-C12 within the pack, and its associated measurement device 180 may be mapped and stored for subsequent use. The position of a cell associated with received measurement data may be determined using the predefined position mapping data. A shortcoming of the prior art system of Fig. 1b is that it requires mapping battery cell location information during pack assembly, which increases manufacturing time and associated costs.

It is an object of at least some embodiments of the present disclosure to address one or more shortcomings of the prior art systems, and in particular to provide an improved solution for determining the position of individual battery cells within battery packs and systems.

Summary of the Disclosure

In accordance with an aspect of the present disclosure, there is provided a method of determining a position of a battery cell within a battery system comprising a plurality of battery cells. Each battery cell may comprise a unique identifier (ID) and each battery cell may be configured to emit a first signal when in a first state. The first signal enables the battery cell in the first state to be distinguished from the plurality of other battery cells comprised in the battery system. The method may comprise: receiving a first signal associated with a battery cell in the first state; obtaining the unique ID associated with the battery cell in the first state; and determining the position of the battery cell in the first state within the battery system. The position of the battery cell in the first state may be determined based on the received first signal associated with the battery cell in the first state. The determined position may be associated with the received unique ID of the battery cell in the first state.

The present method may be used to determine the position of a battery cell within a battery system irrespective of any pre-existing communication hierarchy. In accordance with some embodiments, determined battery cell position information may be used to complement existing battery fault detection systems, and to assist identifying positions of faulty cells for replacement.

One or more battery cells within the battery system may comprise an indicator configured to emit the first signal when the associated battery cell is in the first state. The first signal may comprise an electro-magnetic (EM) signal. The method may further comprise receiving an image of the battery system captured from an image capture device, the image comprising an image of the indicator emitting the EM signal associated with the battery cell in the first state. The position of the battery cell in the first state relative to one or more other battery cells comprised within the battery system may be determined from the received image, based on a position of the indicator emitting the EM signal comprised in the received image.

In accordance with an embodiment, receipt and/or emission of radio-frequency (RF) signals from and/or to battery cells may be used to distinguish a cell from the plurality of other battery cells within the battery system. The position of the cell relative to the other cells within the battery system may be determined on the basis of received RF signal strengths.

In accordance with another aspect of the disclosure, there is provided a processor for determining a position of a battery cell within a battery system comprising a plurality of battery cells, each battery cell having a unique ID, and each battery cell being configured to emit a first signal when in a first state. The first signal enables the battery cell in the first state to be distinguished from the plurality of other battery cells comprised in the battery system. The processor may be configured to: receive a first signal associated with a battery cell in the first state; receive the unique ID associated with the battery cell in the first state; determine the position of the battery cell in the first state within the battery, based on the received first signal associated with the battery cell in the first state; and associate the determined position with the received unique ID of the battery cell in the first state. In accordance with some embodiments the processor may comprise any one or more of: a microprocessor, an integrated circuit, or an application-specific integrated circuit (ASIC).

In accordance with another aspect of the disclosure there is provided a battery management system comprising the afore-mentioned processor for determining a position of a battery cell within a battery system comprising a plurality of battery cells.

In accordance with yet a further aspect of the disclosure there is provided a computer program product comprising computer-executable instructions, which when executed on a processor configure the processor to carry out the afore-mentioned method.

In accordance with yet a further aspect of the disclosure there is provided a non-transitory storage device comprising computer-executable instructions, which when executed on a process configure the processor to carry out the afore-mentioned method.

Brief Description of Drawings

Figures 1a and 1b are schematic illustrations of known prior art battery systems, which have both been described in detail above in the background section.

In the succeeding sections of the disclosure, specific embodiments of the disclosure will be described, by way of non-limiting example only, with reference to the accompanying figures, in which:

Figure 2 is a process flow chart illustrating a high-level method for determining a position of a battery cell within a battery system, in accordance with at least some embodiments of the disclosure;

Figure 3 is a schematic illustration of an arrangement of apparatus for determining the position of a battery cell within a battery system, comprising an image capture device used to capture images of the battery system, in accordance with an embodiment of the disclosure;

Figure 4 is a process flow chart illustrating a method for determining the position of a battery cell using the arrangement of Figure 3, in accordance with an embodiment;

Figure 5 is a schematic illustration of an arrangement of apparatus comprising an RF transmitter and receiver, used to determine relative cell positions within a battery system, in accordance with an embodiment of the disclosure;

Figure 6 is a schematic illustration of an alternative arrangement of apparatus comprising a plurality of RF transmitters and receivers, used to determine relative cell positions within a battery system, in accordance with an embodiment of the disclosure;

Figure 7 is a schematic illustration of an arrangement of apparatus comprising a bus antenna, used to determine relative cell positions within a battery system, in accordance with an embodiment of the disclosure;

Figure 8 is a process flow chart illustrating a method for determining the position of a battery cell using the arrangement of apparatus of any one of Figures 5, 6 or 7;

Figure 9 is a Received Signal Strength Indicator (RSSI) graph of signal strength measurements associated with different battery cells;

Figure 10 is a process flow chart illustrating a method for determining the position of a battery cell using the arrangement of apparatus of any one of Figures 5, 6 or 7;

Figures 11a-c are illustrative RSSI graphs obtained in accordance with embodiments of the disclosure;

Figure 12 is a collated RSSI graph of RF transmissions received from each of the battery cells within a battery system in accordance with embodiments of the disclosure; and

Figure 13 is a schematic illustration of an electronic device configured on a battery cell comprising a local processing unit and memory, in accordance with an embodiment of the disclosure.

Detailed Description of Embodiments

In the following illustrative description of embodiments, like numbered reference numerals appearing in different figures will be used to refer to shared features.

Different embodiments of the present disclosure provide different solutions enabling one or more battery cells comprised within a battery system comprising a plurality of cells, to be distinguished from other battery cells within the system. Once individual cells are distinguishable from adjacent cells within the battery system, then the individual positions of the cells may be determined.

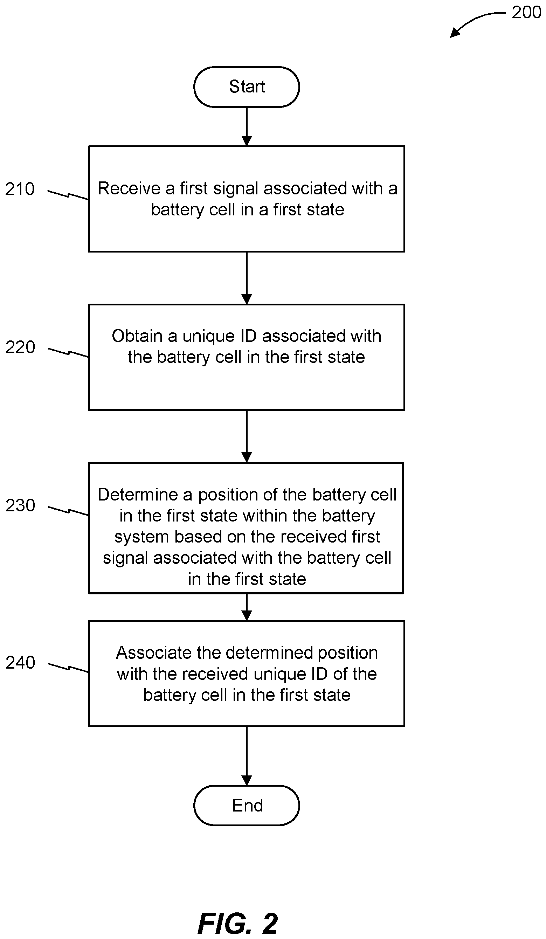

Figure 2 is a process flow chart outlining a general method 200 adopted by various different embodiments disclosed herein for determining the position of a battery cell within a battery system. As mentioned previously, a battery system, as the term is used herein, comprises a plurality of battery cells configured within one or more battery packs, and each battery cell has a unique identifier (ID). In the ensuing description of illustrative embodiments of the disclosure, the battery system is illustrated as comprising a single battery pack in the figures. It is however to be appreciated that this is for non-limiting illustrative purposes only, and the herein disclosed methods may equally be applied to battery systems comprising a plurality of battery packs. The unique ID of each cell may be predefined at the source of manufacture of the battery system.

The general method of Figure 2 may be carried out using the different apparatus illustrated in the figures. The apparatus may comprise a controller, which may be located locally to the battery system or externally to it. In the latter case, the controller may be operatively connected to the battery system. The controller may use the unique IDs associated with the individual battery cells within the battery system, to selectively transmit control signals to specific battery cells. Each battery cell may be configured to emit a first signal when in a first state, the first signal enabling the battery cell in the first state to be distinguished from the plurality of other battery cells comprised in the battery system. In certain embodiments, the control signal emitted by the controller may be used to activate the first state of a battery cell. The apparatus may comprises a processor configured to determine the battery cell's position based on the first signal emitted by the battery cell in the first state. The processor may be located local to the battery system or may be located remotely therefrom.

The method of Figure 2 may be initiated by receiving a first signal associated with a battery cell in a first state, at step 210. As mentioned previously, the first state of the battery may be activated by the controller. The unique ID associated with the battery cell in the first state may be obtained, by the processor, at step 220, from the controller. Obtaining the unique ID may comprise receiving it from the controller. To this end, the controller and processor may be in operative communication, enabling data to be exchanged therebetween. The position of the battery cell in the first state is subsequently determined based on the received first signal, at step 230. The determined position is then associated with the received unique ID of the battery cell in the first state, at step 240. This process may be repeated for all cells comprised within the battery system, thereby enabling a position to be associated with each cell within the battery system, and more specifically, enabling a position to be mapped to each unique ID of each battery cell. In accordance with certain embodiments, this information may be stored in a non-transitory storage device. For example, the information may be stored in a database. The information may be used to complement cell analytics monitoring system, such as a fault detection system.

The ensuing embodiments disclosed herein provide different methods for distinguishing one or more battery cells within a battery system, for the purposes of determining cell position. In certain embodiments, the first signal may be associated with an electro-magnetic (EM) signal emitted by the battery cell in the first state. Illustrative, non-limiting examples of the EM signal comprise any one or more of: an optical signal, an infra-red signal, or a radio-frequency signal (RF). In certain embodiments, the first signal may be associated with a change in the electrical state of the battery cell, such as a voltage change, or a power change. Further details regarding the different embodiments ensue below.

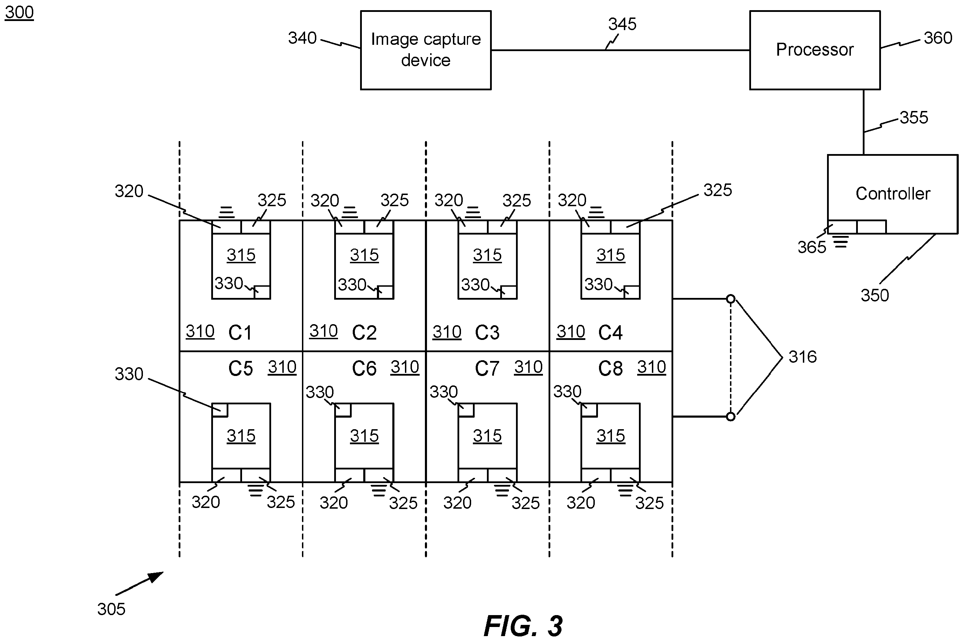

Figure 3 is a schematic illustration of an arrangement of apparatus 300 used to distinguish between battery cells 310 configured to emit an EM signal within battery system 305, in accordance with an embodiment of the disclosure. The plurality of battery cells 310 within battery system 305 may be electrically coupled to one another, and battery system 305 may comprise electrical terminals 316 enabling electrical power to be drawn from battery system 305. Each one of the plurality of battery cells 310 may comprise an electronic device 315. Electronic device 315 may comprise communication means for receiving and/or transmitting data from and/or to the controller 350. The communication means may comprise receiver 325 and/or transmitter 320 enabling wireless communication between electronic device 315 of a battery cell 310 and controller 350. Alternatively, the communication means may comprise a wired connection between electronic device 315 of a battery cell 310 and controller 350.

Each electronic device 315 may comprise indicator 330 configured to emit an EM signal when in the first state, on instruction from controller 350, received via the shared communications means. The instruction may be received via wireless communication where battery cell 310 and controller 350 communicate wirelessly. The instruction may cause the battery cell 310 to activate the first state. In certain embodiments, indicator 330 may comprise a lightbulb or LED configured to emit an optical signal. The optical signal may be comprised in the visible light spectrum. By selectively controlling activation of a battery cell's indicator 330, the controller enables individual battery cells 310 to be distinguishable from adjacent cells.

Apparatus 300 further comprises image capture device 340 configured to capture images of battery system 305, including the battery cell 310 in the first state emitting the EM signal. Image capture device 340 is operatively connected to processor 360 configured to receive images captured by image capture device 340, via shared communication channel 345. Processor 360 is additionally operatively connected to controller 350 via shared communication channel 355. Shared communication channels 345, 355 may be wired or wireless communication channels. Controller 350 may be pre-configured with the unique IDs associated with each cell 310 comprised in battery system 305, albeit it does not know the positions of each cell 310. Processor 360 is configured to receive information from controller 350 associated with the unique ID of the battery cell 310 in the first state emitting the EM signal. In certain embodiments the information associated with the unique ID may comprise the unique ID itself. In this way, processor 360 is able to determine the identity of the battery cell 310 in the first state emitting the EM signal.

Processor 360 is configured to determine a position of the battery cell 310 in the first state emitting the EM signal within battery system 305, from the captured image data received from image capture device 340. The determined position of the battery cell in the first state may subsequently be associated with the received unique ID of the battery cell 310 emitting the EM signal. In this way, processor 360 is able to determine the position and identity of the battery cell 310 in the first state.

In certain embodiments, processor 360 may be comprised in a BMS operatively connected to the plurality of battery cells 310. In some embodiments, processor 360 may be located locally to one or more of the electronic devices 315 on battery cells 310, and electronic devices 315 may be arranged in a master-slave configuration. In other embodiments, controller 350 and/or image capture device 340 may relay data to a cloud server (or other external memory device) accessible by processor 360. In case of the latter, shared communication channels 345 and 355 may be routed via the cloud server.

Controller 350 comprises communication device 365 configured to send instructions to electronic device 315 located on each of the plurality of battery cells 310, using the known unique ID of the associated cell 310. In Figure 3, communication device 365 is illustrated as a wireless communication device configured to communicate wirelessly with electronic device 315 on each battery cell 310. In some embodiments, controller 350 may also be configured to receive data from the electronic devices 315 of each of the plurality of battery cells 310. In some embodiments, controller 350 may be part of a BMS for monitoring the plurality of battery cells 310 when in use. In some embodiments, controller 350 may be situated in one or more of electronic devices 315 on the battery cells 310, and electronic devices 315 may be arranged in a master-slave configuration.

In some non-limiting illustrative embodiments, indicator 330 may comprise any one of: an infrared LED configured to emit an optical infrared signal; a heating device configured to emit an infrared thermal signal; an electrical load configured to emit an infrared signal when current is run through it. In such embodiments image capture device 340 may include an infrared or thermal imaging camera. In other embodiments, indicator 330 may be configured to emit an ultraviolet optical signal, in which case image capture device 340 may be configured to image ultraviolet light.

In accordance with some embodiments, wireless transmitter 320 may be configured to operate in the radio frequency spectrum. Similarly, wireless transmitter 320 may be configured for short-range communication such as near-field communication (NFC), or Bluetooth®. The use of short-range communication reduces the potential of signal interference occurring between different battery cells 310 located in close proximity, such as may occur within a battery pack.

In Figure 3, battery cells 310 are arranged in a two-dimensional grid comprising rows and columns of battery cells across a single surface. However, other configurations of battery cells 310 are also envisaged. For example, battery cells 310 may be arranged in a three-dimensional grid. Image capture device 340 and indicators 330 of the plurality of battery cells 310 may be arranged relative to each other such that indicators 330 are visible to image capture device 340. Arrangement 300 of Figure 3 may then be used to determine battery cell position.

Where the indicators 330 of battery cells 310 are not all visible to image capture device 340, a plurality of different image capture devices positioned at different locations relative to the battery pack 305 may be used to capture the required images of battery cells 310 and their associated indicators 330. Configuring a plurality of different image capture devices at different locations around the battery pack ensures that each indicator may be visible to at least one of the plurality of image capture devices.

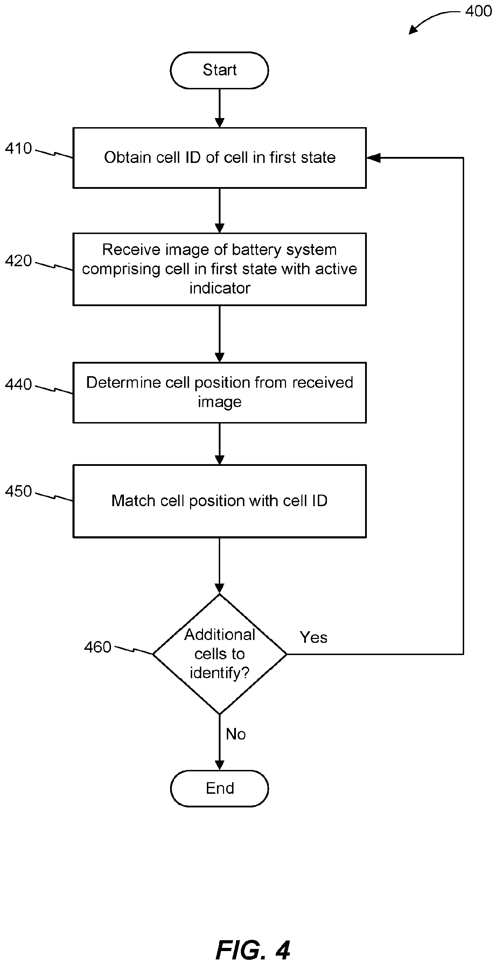

Figure 4 is a process flow chart of the method performed by processor 360 for determining the position of a battery cell 310 within the battery pack 305 of Figure 3, using the image data captured by image capture device 340, and the cell ID data obtained from controller 350. Once controller 350 has instructed the specific battery cell 310 to emit the EM signal, the unique ID associated with the battery cell 310 in the first state emitting the EM signal is obtained by processor 360, at step 410.

When the battery cell 310 in the first state emits the EM signal, image capture device 340 captures an image of battery pack 305 comprising the battery cell in the first state emitting the EM signal. Processor 360 receives the captured image from image capture device 340, at step 420. Processor 360 determines the position of the battery cell in the first state emitting the EM signal from the captured image, at step 440. This may comprise analysing the captured image to identify the battery cell emitting the EM signal. In some embodiments, this may comprise comparing the captured image with a reference image of the battery system 305 in which none of battery cells 310 are in the first state. In other words, in which none of the battery cells are emitting an EM signal. Determining the position of the battery cell in the first state emitting the EM signal may comprise analysing the captured image using object detection techniques to identify the battery cell emitting the EM signal in the captured image.

Processor 360 subsequently matches the determined battery cell position with the cell's unique ID, at step 450. This may comprise mapping the determined battery cell position to a predefined schematic of battery system 305. Processor 360 now knows the position of the battery cell in the first state and the cell's identity from its unique ID. At step 460 it is determined if the position within the battery system 305 of additional battery cells 310 is required, in which case steps 410 through 460 are repeated for each required additional battery cell 310. In certain embodiments, method steps 410 through 460 may be repeated for each battery cell 310 comprised in battery system 305, until processor 360 has determined and associated the position of each cell 310 within the battery system 305 to its associated unique ID.

In certain embodiments, the EM signal emitted by each battery cell 310 in the first state is unique to the specific cell. For example, each battery cell 310 may emit a different wavelength or frequency of EM signal, or the emitted EM signal may be modulated in a way which uniquely identifies the associated cell. For example, when operating in the visible light spectrum, each cell may emit a different colour of visible light. Information associating the unique EM signal to the associated cell's unique ID may be stored in a predefined mapping table, or database. Processor 360 may obtain the unique ID of the battery cell in the first state, from the predefined mapping table, on the basis of the characteristics of the unique EM signal captured by image capture device 340, e.g. on the basis of the colour of the imaged signal. Alternatively, and as mentioned above, the EM signal may be modulated in a way that encodes the unique ID, and which may be determined from receipt of the EM signal.

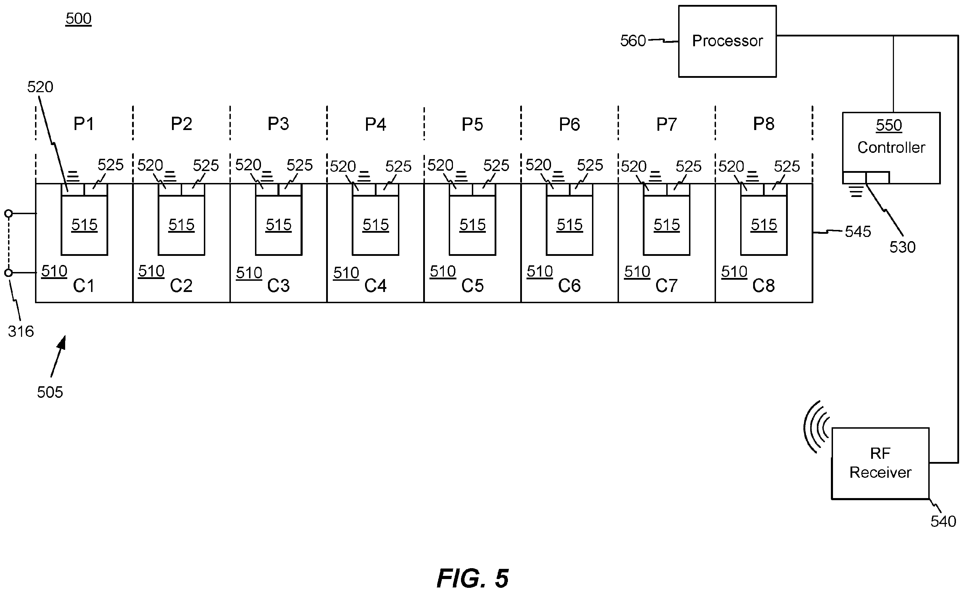

The embodiments illustrated in Figures 5 to 14 disclose solutions in which the position of a battery cell within the battery system may be based on received radio-frequency (RF) signals emitted from or received by battery cells in the battery system.

Figure 5 is a schematic diagram of an arrangement 500 for determining the position of a battery cell within a battery system 505 using RF signals, in accordance with an embodiment. For non-limiting illustrative purposes only, the plurality of battery cells 510 comprised in battery system 505 are arranged in a single row. In common with the arrangement of Figure 3, each battery cell 510 comprises electronic device 515. Each electronic device 515 comprises RF transmitter 520 and RF receiver 525, to enable the associated cell 510 to communicate with controller 550. In place of an image capture device, an RF receiver 540 is provided. RF receiver 540 is illustrated as being operatively connected to processor 560, but in some embodiments may be operatively connected to controller 550. RF receiver 540 is configured to receive RF signals emitted by any one or more of battery cells 510 when in the first state.

Controller 550 is configured to selectively instruct any one or more of battery cells 510 to activate their associated first state and to emit an associated RF signal, via wireless communication device 530. Wireless communication device 530 may itself comprise an RF transmitter, configured to emit RF control signals to selected battery cells 510, to activate their first state.

When a battery cell, such as cell C1 in Figure 5 is in its first state it emits an RF signal. The emitted RF signal is received by RF receiver 540. The strength of RF signal received by RF receiver 540 is proportional to the distance of separation of cell C1 from RF receiver 540. The greater the distance of separation, the greater the signal attenuation, and the lower the signal strength received by RF receiver 540.

In accordance with an embodiment, two or more different battery cells C1 and C2, for example, each emit an RF signal of equal intensity from their respective transmitters 520.

This may be done sequentially on instruction from controller 550. The strength of the RF signal received by RF receiver 540 is dependent on the distance of separation of the cell in the first state emitting the RF signal from RF receiver 540 - in other words, it is dependent on the distance of separation of respectively cell C1 from RF receiver 540, and the distance of separation of cell C2 from RF receiver 540. For example, the expected signal strength received by RF receiver 540 will be proportional to the emitted RF signal strength in dBm minus the path loss (also commonly referred to as path attenuation) $L$, given by:

$$L = 20 \log_{10}\left(\frac{4\pi d}{\lambda}\right) \qquad \qquad eg.1.0$$

where $L$ is the path loss in dBM, $d$ *is* the distance of separation between the emitting cell and RF receiver 540, $\lambda$ is the emitted RF signal wavelength.

In some embodiments, RF receiver 540 may be positioned relative to battery system 505 such that each one of cells C1 and C2 is located at a different distance of separation from RF receiver 540. This may ensure that the RF signal strength received at RF receiver 540 differs for each different emitting cell C1 and C2. Using the differing RF signal strengths received by RF receiver 540 from each one of cells C1 and C2, it is possible to determine the relative positions of cells C1 and C2 within battery system 505.

Whilst the foregoing example was described with reference to determining the relative position of at least two cells C1 and C2 within battery system 505, the method may be extended to determine the relative position of any plurality of battery cells 510 in battery system 505, as further described below.

Returning to the specific configuration illustrated in Figure 5, the plurality of battery cells 510 are arranged in a single row. RF receiver 540 may be positioned in the vicinity of a first end 545 of battery system 540. At this location, the distance of separation between each battery cell 510 and RF receiver 540 may be unique. This helps to ensure that the RF signal transmission strength received from each one of the plurality of battery cells 510 may also be unique. The strongest signal strength is received from the cell closest to RF receiver 540, whilst the weakest signal is received from the cell furthest from RF receiver 540. For example, the signal strength received by RF receiver 540 from cell C8 is greater than the signal strength received from cell C7, which in turn is greater than the signal strength received from cell C6, and so forth. The weakest signal strength is received from cell C1, which is located furthest from RF receiver 540. The relative order and hence the relative positions of cells C1 to C8 may be determined on the basis of the signal strengths received by RF receiver 540, since the RF signal strength received from any two different cells may always differ.

Processor 560 may be configured to determine the relative cell positions of two or more of the plurality of battery cells 510 within battery system 510, from the RF signal strengths emitted by the two or more cells and received at RF receiver 540, in the manner described above. In common with the preceding embodiment of Figure 3, processor 560 may obtain the unique ID associated with the battery cell in the first state emitting the RF signal from controller 550. Alternatively, the RF signal emitted by each cell may comprise information enabling the associated cell's unique ID to be determined by processor 560. In yet a further embodiment, the RF signal emitted by each cell may comprise the associated cell's unique ID, enabling the unique ID to be determined directly from the received RF signal. For example, the RF signal may be uniquely modulated in such a way that the cell's unique ID may be determined from the modulation, or the unique ID may be directly modulated into the RF signal.

In the preceding description reference has been made to received RF signal strength. It is to be appreciated that this may relate to Received Signal Strength Indication (RSSI), which is the measure of signal strength commonly used in wireless networks.

In certain embodiments where the location of RF receiver 540 is known relative to battery system 505, then the received RF signal strength information may be used to determine the location of the two or more battery cells with respect to RF receiver 540. For example, this may be achieved by determining the distance of separation of the cell emitting the RF signal from RF receiver 540.

It is to be appreciated that whilst RF receiver 540 and controller 550 are illustrated as separate devices in Figure 5, in certain embodiments, they may be comprised in the same device. For example, controller 550 may comprise RF receiver 540, in which case controller 550 both controls operation of each battery cell's first state, and receives the RF signal emitted by each cell in the first state. Similarly, processor 560 and controller 550 whilst both illustrated in Figure 5 as separate devices may be comprised in the same device, in certain embodiments. Similarly, in some embodiments the functionality of RF receiver 540, controller 550, and processor 560, may be implemented by a single device, or any plurality of different devices.

In accordance with some embodiments, the position of RF receiver 540 relative to battery system 505 may be varied. This may be particularly useful where battery cells 510 and their associated RF transmitters 520 are configured to emit short range RF signals such as those used in near-field communication (NFC) protocols. In such embodiments, emitted RF signals are only detectable in the vicinity of the emitting RF transmitter. Accordingly, as the cell in the first state emits the short range RF signal, the position of RF receiver 540 is varied relative to battery system 505 until RF receiver 540 is within range and the emitted short range RF signal is received by RF receiver 540. The position of RF receiver 540 relative to battery system 540 when the short range RF signal is measured, may be used to infer the relative position of the cell in the first state. The relative position of RF receiver 540 may be varied manually, in which case RF receiver 540 may comprise a wand; or the relative position may be varied along an external rig placed around battery system 505, comprising tracks extending around the rig enabling the position of RF receiver 540 to be manipulated relative to battery system 505.

In accordance with certain embodiments a plurality of RF receivers may be used to receive the RF signals emitted by the plurality of battery cells. This is particularly useful where the arrangement of battery cells within the battery system is such that there does not exist a unique distance of separation between each cell and a single RF receiver, as illustrated in Figure 5.

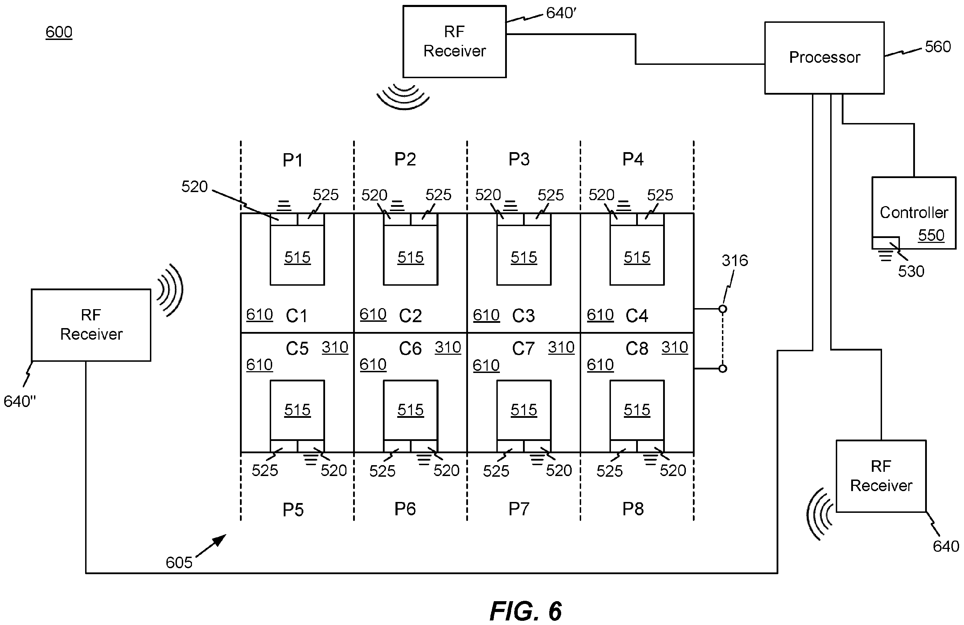

Figure 6 is a schematic illustration of an arrangement of apparatus 600 in which the plurality of battery cells 610 are arranged in a two-dimensional grid pattern comprising two rows (cells C1 to C4 and C5 to C8) and four columns (cells C1 and C5, C2 and C6, C3 and C7, and C4 and C8). Features shared with Figure 5 are referred to in Figure 6 using the same reference numerals as present in Figure 5. In contrast with the arrangement 500 of Figure 5, the arrangement 600 of Figure 6 may comprise a plurality of RF receivers 640, 640', 640" each located at a different position relative to battery system 605. The use of a plurality of RF receivers 640, 640', 640" may ensure that for each battery cell 610 there is a unique distance of separation formed between the cell and at least one of the plurality of RF receivers 640, 640', 640". This may help to ensure that the relative positions of two or more cells which appear evenly distanced with respect to one RF receiver 640, form unique distances of separation with at least one of the other RF receivers 640', 640", and therefore the relative positions of the cells may be more accurately determined.

The RF signal emitted by a battery cell in the first state may be received by each one of the plurality of RF receivers 640, 640', 640". The signal strength received by each one of the plurality of RF receivers 640, 640', 640" may be determined. This may occur locally to each RF receiver 640, 640', 640" or may occur at processor 560. The unique ID of the cell in the first state emitting the received RF signal may be obtained in the manner described previously. This process may be repeated for two or more of the plurality of cells 610, and ensures processor 560 knows the identity and the RF signal strength received from each one of the two or more cells 610. The RF signal strength information may be compared by processor 560, and used to determine the relative positions of the two or more cells. The determined relative positions may subsequently be associated with the unique IDs of the associated battery cells, in a similar manner as described in relation to the embodiment of Figure 3.

In accordance with some embodiments, the RF signal strength data measured by each one of the plurality of RF receivers 640, 640', 640" may be aggregated and processed by processor 560 to generate a relative signal strength map, and the relative positions of the cells may be determined from the map. This may be advantageous where it is necessary to determine the positions of a large number of different battery cells comprised within a battery system.

Whilst the arrangement of Figure 6 illustrates three different RF receivers 640, 640', 640" located at different positions relative to battery system 605, this is for non-limiting illustrative purposes only, and any plurality of RF receivers positioned at different locations relative to battery system 605 may be provided. The precise number of different RF receivers used may in part be dependent on the geometrical configuration of the plurality of battery cells within the battery system, and may be selected to ensure that each cell forms a unique distance of separation to at least one of the plurality of RF receivers.

In accordance with some embodiments, one or more of the plurality of RF receivers may be comprised in one or more battery cells. For example, with reference to Figure 5, RF receiver 640 may be comprised in cell C8. Cell C8's electronic device 515 may in addition to comprising RF transmitter 520, also comprise an RF receiver. This RF receiver may operate in the same manner as RF receiver 540 described above, and may receive the RF signals emitted by any one of battery cells C1 to C7 when in the first state. Cell C8 may subsequently communicate with processor 560 via controller 550, to enable the received RF signal strengths associated with the different cells to be determined. Similarly, with reference to Figure 6, the plurality of RF receivers 640, 640', 640" may be comprised in different battery cells. For example, in cells C1, C7 and C4. Each one of these cells receives an RF signal emitted by any one of the other cells in the first state, and the relative positions of the cells comprised within battery system 605 may occur as previously described in relation to Figure 6. It is immaterial for the purposes of the present disclosure whether the function of the one or more RF receivers is provided by one or more RF receivers located externally to the battery system, or whether it is provided by RF receivers comprised on the battery cells.

In some embodiments, RF receivers 540 of Figure 5 and RF receivers 640, 640', 640" of Figure 6 may be replaced with RF transmitters, and RF transmitters 520 of Figures 5 and 6 comprised on the battery cells 510, 610 may be replaced with RF receivers. The RF transmitters are positioned such that a unique distance of separation may be formed between each cell and at least one RF transmitter, in a similar manner as described previously. In such embodiments, the RF transmitters emit an RF signal which may be received by each one of the plurality of battery cells. The RF signal strength received by each cell will be dependent on the distance of separation to the RF transmitter. Where each cell forms a unique distance of separation with at least one RF transmitter, the relative positions of the different cells may be determined by processor 560 in the same manner as done in relation to Figures 5 and 6. Controller 550 may selectively activate a cell's first state by instructing it to activate its RF receiver. This may help to ensure that as the RF signal is broadcast, only the cell in the first state receives the transmitted RF signal, and transmits a subsequent signal comprising information associated with the received RF signal strength to controller 550, for subsequent processing by processor 560.

Alternatively, the plurality of cells may each simultaneously receive the transmitted RF signal, and may subsequently transmit the subsequent first signal comprising information associated with the received RF signal strength to controller 550, for subsequent processing by processor 560. To facilitate cell identification, the first signal transmitted by each cell may either comprise information enabling the unique ID associated with the cell to be determined, or may comprise the unique ID itself (e.g. the signal may be uniquely modulated). Accordingly, for the purposes of the present disclosure it is immaterial whether the signal strength of an RF signal emitted by each battery cell is used to determine cell position, or whether the RF signal strength received by each battery cell is used to determine cell position - both solutions fall within the scope of the present disclosure.

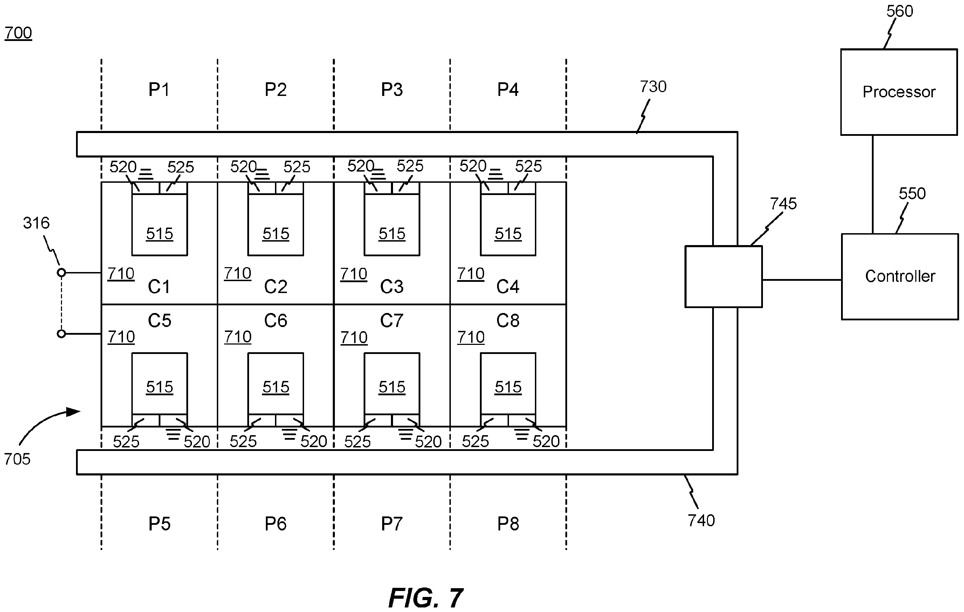

In some embodiments, the apparatus may additionally comprise a physical transmission line located between the RF receiver and each one of the plurality of battery cells. For example, a bus antenna, providing a transmission path between the electronic devices of each cell and the controller. Use of a physical transmission line may reduce signal interference between cells, by enabling low power transmitters to be used, which incidentally may also reduce overall power consumption. An example of such an embodiment is disclosed in relation to Figure 7 below.

Figure 7 is a schematic illustration of an arrangement of apparatus 700, similar to arrangement 600 of Figure 6, with the exception that apparatus 700 further comprises first bus antenna 730, and second bus antenna 740. First and second bus antenna provide an RF transmission path for each row of battery cells 710. First bus antenna 730 provides an RF transmission path between cells (C1-C4) and controller 550. Second bus antenna 740 provides a transmission path between cells (C5-C8) and controller 550. First and second bus antennas 730, 740 may bee connected by node 745. In some embodiments, node 745 may comprise a switch configured to switch the transmission path from first antenna 730 to second antenna 740 and vice versa. In some embodiments, node 745 may comprise a splitter for sending an RF transmission from controller 550 simultaneously along both first bus antenna 730 and second bus antenna 740. In some embodiments (not shown), a single antenna may be provided configured to follow a path around battery system 705, thereby providing a shared transmission path between each battery cell 710 and controller 550.

The provision of a plurality of bus antennas 730, 740 as shown in Figure 7, may enable communication between controller 550 and selected rows C1-C4 and C5-C8 of battery cells. Communicating with selected cell rows helps to ensure that unique transmission strengths are more readily identifiable for each battery cell C1-C4 or C5-C8 located in the selected row. For example, cells C4 and C8 are located equidistant from controller 550, and therefore equivalent RF transmission strengths are received from these cells, where both C4 and C8 emit an RF signal with the same emission strength. A further means of discriminating between cells located equidistant from controller 550 may be required, and this may be provided by varying the transmission path relative to battery system 705, by switching between first bus antenna 730 and second bus antenna 740. When first bus antenna 730 is selected, the relative positions of cells C1 through C4 may be determined from the RF signal strength received from each cell. Subsequently, the transmission path may be switched to second bus antenna 740, and the relative positions of cells C5 through C8 may be determined from the RF signal strength received from each cell. The signal attenuation experienced by RF signals transmitted over the bus antenna transmission line may be dependent on the distance the RF signals traverse over the transmission line between the emitting cell and controller 550 acting as the RF receiver. Each battery cell positioned in a given row is located at a different relative position along the length of first bus antenna 730. It follows that the RF signal strength received by controller 550 may be dependent on the distance along the bus antenna transmission line travelled, which may be dependent from the position of the cell emitting the RF signal relative to the bus antenna. Accordingly, the relative positions of the cells may be determined in a similar manner as described in relation to the previous embodiments using a bus antenna as the RF signal transmission medium.

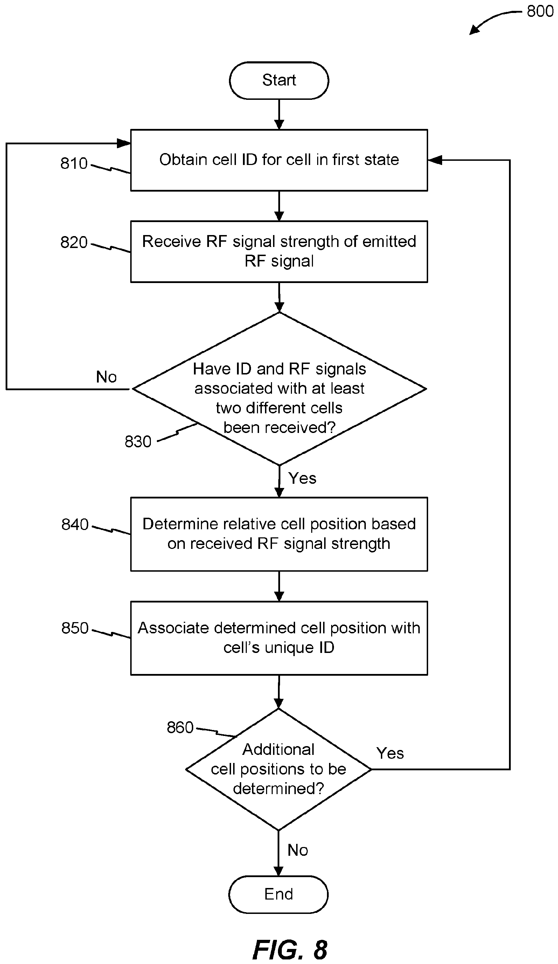

Figure 8 is a process flow chart illustrating a method 800, in accordance with an embodiment, carried out by processor 560 of any one of Figures 5, 6 or 7, for determining the position of a battery cell from RF signal strengths. The method may commence with processor 560 obtaining the unique ID of the battery cell in the first state, at step 810. The unique ID may be obtained using any one of the previously described methods. In embodiments where the battery cell 610 transmits the RF signal to RF receiver 540 of Figure 5, or RF receiver 640, 640', 640" of Figure 6, the cell in the first state may be associated with the battery cell emitting the RF signal. In embodiments where the RF signal is emitted by an RF transmitter located externally to the battery system, as described previously, the first state may relate to the battery cell receiving the emitted RF signal via its RF receiver, and communicating this to controller 550 via a first signal, which may comprise a wireless signal. Similarly, in embodiments where the RF transmitter is located on one or more of the battery cells within the battery system, and the RF signal is transmitted from these cells, the battery cell in the first state may relate to the battery cell receiving the emitted RF signal, as described previously.

The received RF signal strength information may be received by processor 560, at step 820. In accordance with some embodiments, and as previously described, this may relate to the strength of an RF signal received by a battery cell, either emitted from an RF transmitter located externally to the battery system, or comprised on another battery cell. Similarly, in accordance with other embodiments described above, the RF signal strength may relate to the strength of an RF signal emitted by a battery cell received by an RF receiver either located externally from the battery system, or comprised in another battery cell within the battery system. The RF signal strength information may be received from controller 550. In certain embodiments, processor 560 may determine the RF signal strength, at step 820, from RF signal information received from controller 550.

To determine the relative positions of at least two cells in the first state, requires information regarding the RF signal strengths associated with the two cells in the first state. Accordingly, at step 830, it is determined if RF signals associated with at least two different battery cells in the first state have been received, and their associated unique IDs obtained. This may be determined by processor 560. If it is determined that an RF signal associated with only a single battery cell has been received, then steps 810 through 830 are repeated, until it is determined that RF signals associated with at least two different battery cells in the first state have been received.

Once RF signals associated with at least two different battery cells in the first state have been received, processor 560 determines the relative cell positions of the at least two battery cells in the first state, based on the received RF signal strength information associated with each one of the at least two cells in the first state, at step 840. For example, this may comprise comparing the RF signal strengths associated with the at least two different battery cells in the first state, and determining the positions of the two cells relative to each other. To illustrate this, consider battery system 505 of Figure 5. The battery cell associated with the weakest RF signal strength is cell C1 located at position P1. The cell associated with the next weakest RF signal strength is cell C2 located at position P2. Each subsequent cell in the battery system 505 is associated with a slightly stronger RF signal strength. The order of increasing RF signal strength mirrors the sequential order in which the cells are arranged relative to RF receiver 540, such that cell C8 located at position P8 is associated with the strongest RF signal strength. The relative positions of cells C1 to C8, may be determined by ordering the RF signal strengths associated with each cell in sequence of magnitude.

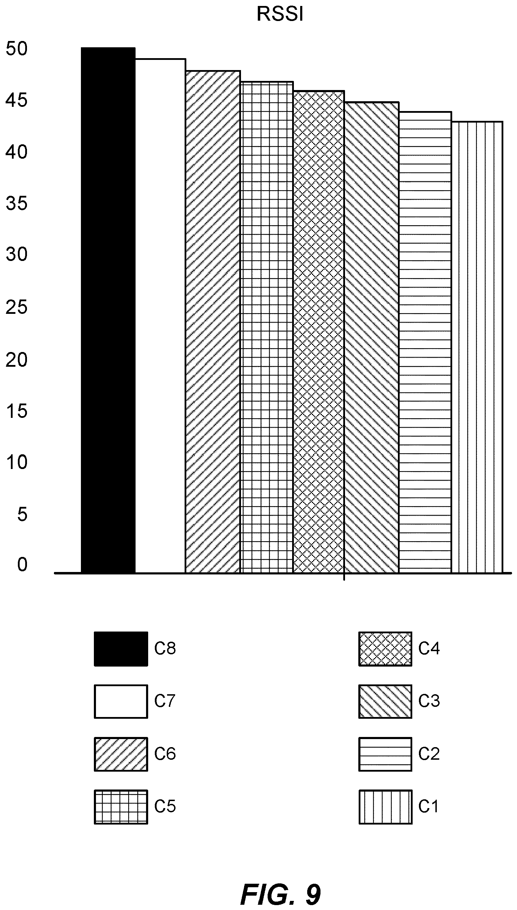

Figure 9 is an RSSI graph illustrating the RF signal strength associated with each one of cells C1 to C8 of Figure 5. The RF signal strengths associated with each cell have been arranged in order of decreasing RSSI, where the y-axis is indicative of the relative distance from RF receiver 540, and the x-axis is an arbitrary measure of RSSI strength. The order in which the RSSI signals are arranged mirrors the relative order in which the cells are positioned within battery system 505. Thus, by comparing RF signal strengths associated with two or more battery cells in the first state, it is possible to determine their relative positions within the battery system.

Once the relative cell positions have been determined, processor 560 may associate the determined cell positions to the unique IDs of the battery cells in the first state, at step 850. At step 860 it is determined if the relative positions of additional battery cells need to be determined, and if so, steps 810 through 860 are repeated until all required battery cell positions have been determined. The battery cell position information along with the associated unique ID may be stored in a memory or non-transitory storage medium for subsequent use, for example, by a fault detection system.

In some embodiments, method 800 may comprise sequentially determining the position of the battery cells positioned in each row within the battery system. For example, in Figure 7, controller 550 may not initially know which unique IDs are associated with battery cells C1 to C4 located at positions P1 to P4. However, controller 550 may be able to selectively instruct which row of cells are to transmit RF signals to controller 550, by sending instructions along either first bus antenna 730 or second bus antenna 740. Such instructions may comprise instructions for each one of cells C1 to C4 in operative communication with first bus antenna 730 to broadcast an RF signal comprising data enabling the unique ID of the cell to be determined by controller 550. In certain embodiments the broadcast RF signal may comprise the unique ID of the emitting cell. Controller 550 may subsequently determine both the unique ID and the relative signal strength of the RF signal received from each one of cells C1 to C4 located in the first row, and the relative positions of the cells, in the same manner as described above in relation to the other disclosed embodiments. The same process may be repeated for second bus antenna 740, in order to determine the relative positions of all cells comprised in battery system 705.

In common with previously disclosed embodiments, controller 550 of Figure 7 may, in certain embodiments, comprise the unique IDs of each cell 710 comprised in battery system 705. Controller 550 may arbitrarily select to send instructions along first bus antenna 730 or second bus antenna 740. Once either first bus antenna 730 or second bus antenna 740 is selected, controller 550 may instruct a cell associated with an arbitrarily selected known unique ID to transmit an RF signal along the selected bus antenna. If for a given instructed cell no RF signal is received by controller 550, then this is indicative that the instructed cell is not positioned relative to the active bus antenna, and has not received the instructions from controller 550. Controller 550 may subsequently select an alternative unique ID associated with a different cell, and instructs the associated cell to transmit an RF signal response on the active bus antenna transmission line. This process of arbitrarily selected a known unique ID associated with a cell may be repeated until an RF signal response has been received from each cell positioned relative to the active bus antenna. Once an RF signal response has been received from each cell positioned relative to the active bus antenna, the active bus antenna may be switched, and a similar process of selecting an outstanding unique ID associated with a battery cell from which no previous RF signal response has yet been received, and instructing the associated cell to respond with an RF signal. This may be repeated for each outstanding unique ID, until all cells are accounted for.

In accordance with some embodiments, a single bus antenna may be used which extends along a plurality of different rows (or stacks of rows) of battery cells. For example, turning to Figure 7, a single bus antenna may extend around battery system 705, in proximity with each battery cell 710. Providing the position of the bus antenna relative to battery system 705 is known, the relative position of each battery cell 710 may be determined from the relative RF signal strengths emitted by the cells, as described above. In such embodiments, controller 550 arbitrarily selects a known unique ID associated with a cell, in a similar manner as described above, and awaits receipt of the RF signal response via the bus antenna transmission line. This process may be repeated for each known unique ID and until an RF signal response has been received from each associated cell.

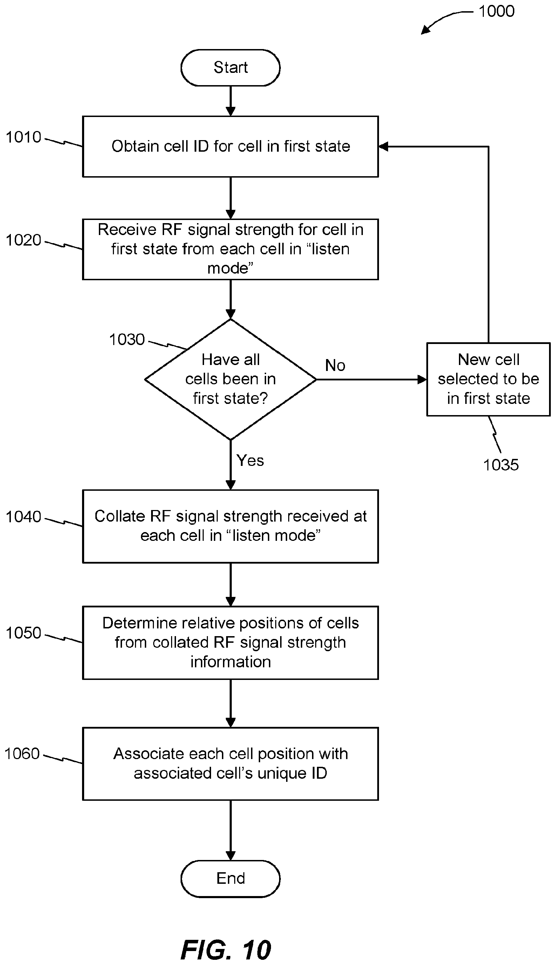

Figure 10 is a process flow chart illustrating a method 1000 performed by processor 560 for determining the relative position of a plurality of battery cells within the battery systems 505, 605, 705 of any one of Figures 5,6 or 7, in accordance with an embodiment. Each battery cell 510, 610 710 may be configured with both RF transmitter 520 and RF receiver 525. A cell in the first state emits an RF signal from RF transmitter 520. Each cell may also operate in a receiving mode when not in the first state, referred to herein as 'listen mode', in which the cell's RF receiver 525 may receive the RF signal emitted by the cell in the first state. When in listen mode, a cell may only receive the RF signal emitted from the cell in the first state. Accordingly, when any one cell is in the first state, the other cells may all be in the listen mode. For example, with reference to Figure 5, this may mean that when cell C1 is in the first state, cells C2 through C8 are all in the listen mode, and each may receive the RF signal emitted by cell C1. In this way, a plurality of different cells may receive the RF signal emitted by the cell in the first state. The cell in the first state may be selectively varied as described previously, such that each cell in the battery system is in the first state at some stage during execution of method 1000. For example, once each one of cells C2 through C8 has received the RF signal emitted by cell C1 in the first state, controller 550 may instruct cell C2 to be in the first state, and cells C1 and C3 to C8 may be in the listen mode, each receiving the RF signal emitted by cell C2. This process may be repeated for each cell to ensure that an RF signal is received from each cell in the battery system at each battery in the listen mode. The RF signal strengths received by each cell in the listen mode, may be analyzed and used to determine the relative positions of each cell in the battery system.

Processor 560 may obtain the unique ID associated with the cell in the first state, at step 1010. In common with previous embodiments, controller 550 may control which cell is in the first state, and processor 560 may obtain the unique ID of the cell in the first state from controller 550. Processor 560 may receive the RF signal strength associated with the cell in the first state, as measured by each cell in the listen mode, at step 1020. In this way, the processor may receive the RF signal strength measured by each cell in the listen mode associated with the cell in the first state.

At step 1030 it may be determined if all cells in the battery system have been in the first state and emitted an RF signal. This may be determined by controller 550 or processor 560. If it is determined that some cells have not yet been in the first state, then controller 550 may instruct a new cell which has not yet been in the first state, to be in the first state, at step 1035, and steps 1010 through 1030 may be repeated, until it is determined, at step 1030, that all cells comprised in the battery system have been in the first state and emitted an RF signal. This may help to ensure that each battery cell within the battery system receives RF signals emitted from each other battery cell in the battery system.

The RF signal strength information associated with the RF signals received by each one of the plurality of cells in the listen mode, may be collated, at step 1040. The collated RF signal strength information may subsequently be used by processor 560 to determine the relative positions of each one of the plurality of cells, in a similar manner as described above in relation to the preceding embodiments. Once the relative position of each cell has been determined, processor 560 may proceed to associate the unique ID of each cell with its determined relative position, at step 1060, in a similar manner as described previously.

In certain embodiments, an RSSI map may be generated from the collated RF signal strengths. For example, measured RF signal strengths may be superimposed on a known schematic of the battery system. The RSSI map may take the form of a contour map, in which the different contour lines represent measured signal strengths associated with the unique IDs of different cells. Contour lines associated with the greatest measured signal strengths may be located closer to the RF receiver, than weaker signal strengths. The order of the contour lines may be indicative of the relative positions of the cells emitting the RF signals.

In some embodiments, rather than a plurality of the cells each being in the listen mode whilst simultaneously a single cell is in the first mode, only a single cell may be in the listen mode whilst a single other cell is simultaneously in the first state emitting the RF signal. In such embodiments, for any given cell in the listen mode, steps 1010 through 1030 are sequentially repeated for each other cell emitting an RF signal in the first state. For example, with reference to Figure 5, and for illustrative purposes only, cell C1 may be in the listen mode. Controller 550 instructs cells C2 to be in the first state and to emit an RF signal. The RF signal is received by cell C1, after which controller 550 instructs cell C2 to disactivate its first state, and instructs cell C3 to emit an RF signal, which is received by cell C1. This process may be repeated for each cell until each one of cells C2 to C8 has been in the first state, and cell C1 has received an RF signal emitted from each one of cells C2 to C8. Cell C2 is subsequently instructed by controller 550 to be in the listen mode, and steps 1010 through 1030 are repeated with cell C2 receiving RF signals emitted by each one of cells C1 and C3 to C8 in the first state. This process may be subsequently repeated until each one of cells C1 through C8 has been in the listen mode.

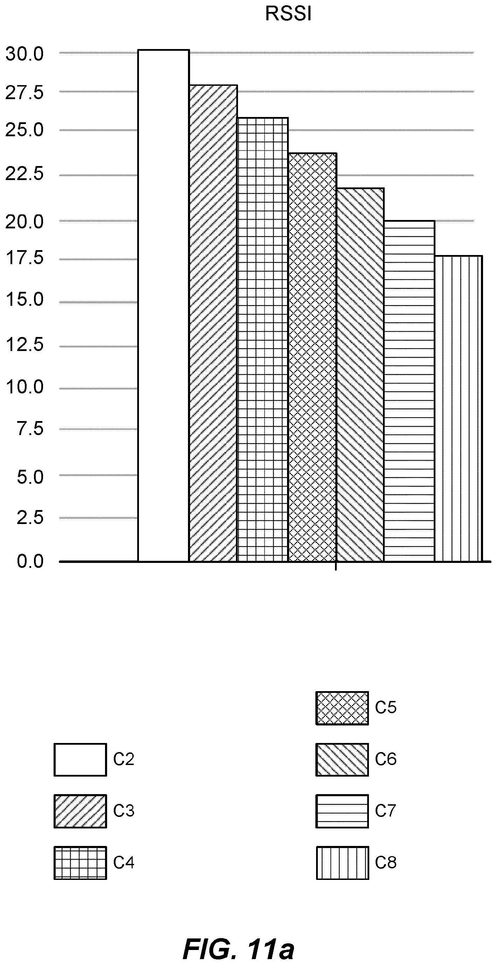

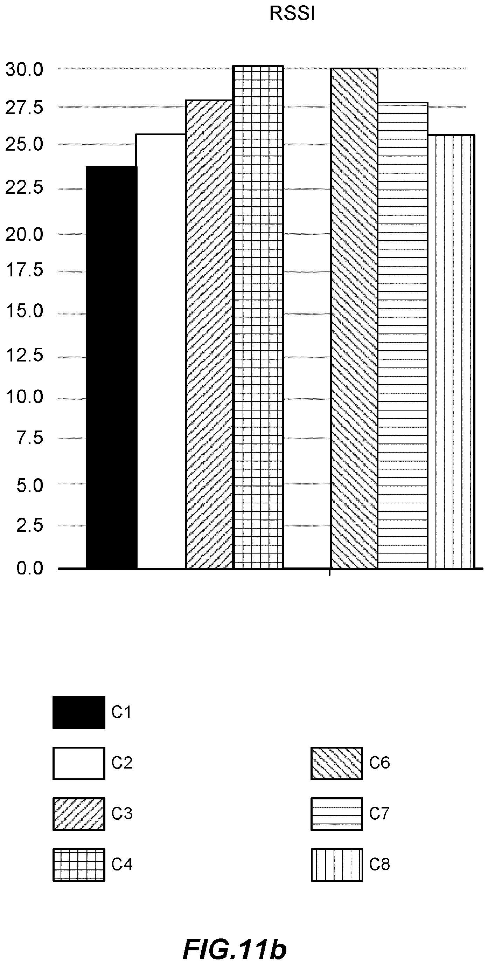

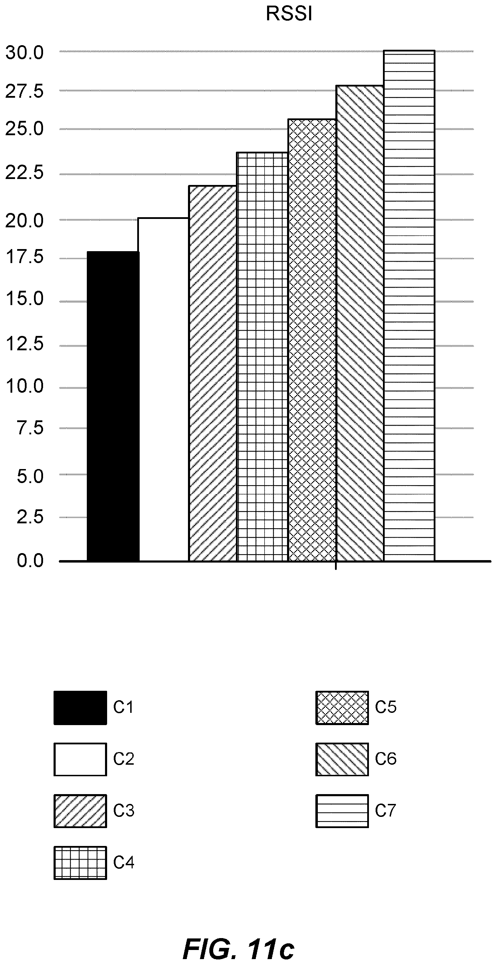

Figures 11a-c are exemplary RSSI graphs measured by cells 510 of Figure 5. In particular, Figure 11a is an exemplary RSSI graph of RF signals strengths received by cell C1 in the listen mode at position P1. Figure 11b is an exemplary RSSI graph of RF signal strengths received by cell C5 at position P5. Figure 11c is an exemplary RSSI graph of RF signal strengths received by cell C8 at position P8. Figures 11a-c illustrate how the received signal strengths are a function of the distance of separation between the cell in the first state emitting the RF signal and the cell in the listen mode receiving the RF signal.

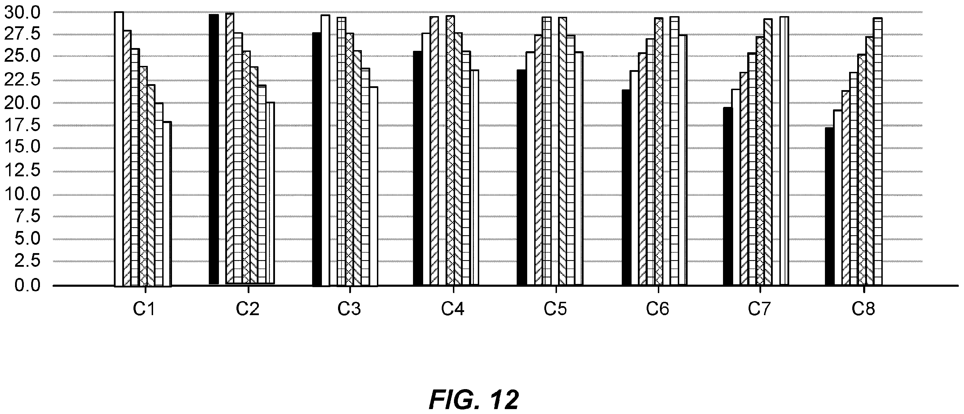

Figure 12 is an aggregated RSSI graph illustrating the RF signal strengths received by each cell 510 in Figure 5, from each other cell in the first state. More specifically, Figure 12 illustrates the aggregated RSSI graph for an embodiment of Figure 5, where each cell 510 comprises an RF receiver 525 and an RF transmitter 520, and each cell 510 is configured to transmit an RF signal when in the first state, whilst all other cells are configured to measure the received RF signal using their RF receivers 525. The aggregated graph of Figure 12 illustrates the RF signal strengths received by each cell, from each other cell in battery system 505. The positions of each one of cells C1 through C8 relative to each other may be determined from the aggregated RSSI graph of Figure 12. For example, the RSSI measurements associated with cell C1 imply that cell C2 is the only cell directly adjacent to cell C1. This is indicated by the strongest RF signal having been received by cell C1 from cell C2. This implies that cell C1 is located at one end of the linear configuration of battery system 505. Similarly, the same is true of the RSSI signals received by cell C8. In contrast, cell C2 receives equally strong RSSI signals from cells C1 and C3, implying that cell C2 is located equidistant from cells C1 and C3 - or, in other words, is sandwiched between cells C1 and C3. This type of analysis may be carried out for each cell in order to determine the relative positions of each cell with respect to each other.

In some embodiments, the RSSI graph measured for transmissions between the cells may be used to determine a distance between the cells . In some embodiments, the distance between cells may be determined using a pre-determined mapping table mapping received signal strength as a function of transmission distance for a given signal. This reduces processor and/or controller processing overhead associated with determining a distance of separation based on received signal strength.

Depending on the configuration of the cells within a battery system, in some embodiments a single RSSI graph may suffice to determine the positional relationships for all cells within the battery system. For example, this may be the case for simple configurations, such as the linear configuration of cells of Figure 5. More complex configurations of cells within battery systems (e.g., configurations comprising more than one row/column/stack of battery cells - such as illustrated in Figures 6 and 7), may require a plurality of RSSI graphs taken from different positions relative to the battery system, to enable the positional relationship of the cells to be determined.

In accordance with some embodiments, RSSI data and associated RSSI graphs may be generated from a statistical analysis of received signal strengths, captured over an extended period of time. This may help to mitigate for any signal strength fluctuation inherent to the transmitters, and may ensure more accurate cell positions are determined. The electronic devices 315, 515 of any of the above embodiments may comprise any of the following additional features.

Electronic device 315, 515 may be electrically coupled to contact terminals (not shown) on its associated battery cell 310, 510, 610, 710, enabling electronic device 315, 515 to be electrically powered by battery cell 310, 510, 610, 710, and obviating the need for a separate power source. Electrical coupling may occur by any means that establishes an electrical path between the contact terminals of battery cell 310, 510, 610, 710 and electronic device 315, 515. In accordance with some embodiments this may be provided by wired connections between the electronic device and the contact terminals of battery cells 310, 510, 610, 710.

Electronic device 315, 515 may additionally be configured to determine at least one physical characteristic of its associated battery cell. The at least one physical characteristic may relate to a physical or electrical characteristic of the battery cell.

In accordance with some embodiments the transmission frequencies of emitted RF signals may range from around 400MHz to around 5GHz. In some embodiments the transmission frequencies may relate to those used for Short Range Devices (e.g. around 434MHZ and 860MHz), and/or those used for ISM bands (e.g. 915MHz, 2.45GHz, 5.875GHz).

In accordance with some embodiments, determined battery cell positions may be stored in a non-transitory memory. The non-transitory memory may be operatively coupled to processor 360, 560, and/or to controller 350, 550. In some embodiments, the non-transitory memory may be comprised in one or more electronic devices 315, 515 associated with one or more cells. This ensures that the associated battery cell has a record of its position in a locally accessible memory, accessible by a BMS if required.

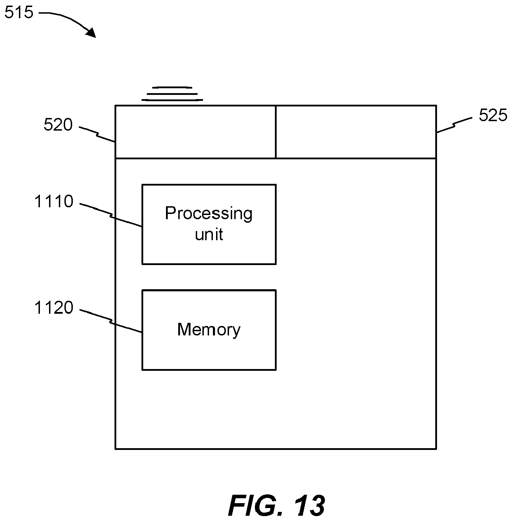

Figure 13 is a schematic diagram of electronic device 515 of Figures 5, 6 or 7 additionally comprising local processing unit 1110 and memory 1120, in accordance with embodiments. Memory 1120 may be transitory or non-transitory. Local processing unit 1110 enables electronic device 515 to measure and/or determine a characteristic of the battery cell electronic device 515 is coupled to, as described above. Memory 1120 provides one or more storage facilities for storing determined data, which may comprise, for example, determined cell position data, and/or fault detection data. Memory 1120 may store instructions used by processor 1110 to perform the above described methods of the disclosure.

The disclosed embodiments are not limited to particular software programs or devices configured to perform dedicated tasks. For example, the memory 1120 may store a single program, that performs the functions associated with the disclosed embodiments, or may comprise multiple software programs. Memory 1120 may include one or more storage devices configured to store data for use by processor 1110.

Some embodiments may comprise a memory including, but not limited to a hard drive, a solid state drive, a CD-ROM drive, a peripheral storage device (e.g., an external hard drive, a USB drive, etc.), a database, a network drive, a cloud storage device, or any other storage device.

In accordance with some embodiments, electronic device 515 may take the form of, but is not limited to, a microprocessor, embedded processor, or the like, or may be integrated in a system on a chip (SoC). Furthermore, according to some embodiments, electronic device 515 may be from the family of processors manufactured by Intel®, AMD®, Qualcomm®, Apple®, NVIDIA®, or the like. The electronic device 515 may also be based on the ARM architecture, a mobile processor, or a graphics processing unit, etc. The disclosed embodiments are not limited to any specific type of processor.

The descriptions of the various embodiments of the present disclosure have been presented for purposes of illustration, and are not intended to be exhaustive or limiting to the scope of the disclosure. Many modifications and variations of the disclosed embodiments will be apparent to those of ordinary skill in the art from the herein disclosed embodiments, without departing from the scope of the disclosure. The terminology used herein to disclose the embodiments of the disclosure was chosen to best explain the principles of the embodiments, the practical application or technical improvement over technologies found in the marketplace, or to enable others of ordinary skill in the art to understand the embodiments disclosed herein.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

Further features of the disclosure are set out in the following clauses:

1. A method of determining a position of a battery cell within a battery system comprising a plurality of battery cells, each battery cell having a unique identifier, ID, and each battery cell being configured to emit a first signal when in a first state, the first signal enabling the battery cell in the first state to be distinguished from the plurality of other battery cells comprised in the battery system, the method comprising:

   receiving a first signal associated with a battery cell in the first state;

   obtaining the unique ID associated with the battery cell in the first state;

   determining the position of the battery cell in the first state within the battery system, based on the received first signal associated with the battery cell in the first state; and

   associating the determined position with the obtained unique ID of the battery cell in the first state.

2. The method of clause 1, wherein one or more battery cells comprised within the battery system each comprise an indicator configured to emit the first signal when the associated battery cell is in the first state, the first signal comprises an electro-magnetic, EM, signal, and the method further comprises:

   receiving an image of the battery system captured from an image capture device, the image comprising an image of the indicator emitting the EM signal associated with the battery cell in the first state; and

   determining from the received image, the position of the battery cell in the first state relative to one or more other battery cells comprised within the battery system, based on a position of the indicator emitting the EM signal comprised in the received image.

3. The method of clause 2, further comprising:
determining the position of the battery cell in the first state associated with the indicator emitting the EM signal comprised in the received image, by comparing the received image with a reference image of the battery system, the reference image comprising an image of the battery cell not in the first state.

4. The method of clause 2 or 3, wherein the indicator is configured to emit an infrared signal when the associated battery cell is in the first state.

5. The method of clause 2 or 3, wherein the indicator comprises an optical device configured to emit an optical signal when the associated battery cell is in the first state, and the optical signal comprises any one of:

   a) an optical signal in the visible light spectrum;

   b) an infrared optical signal; or

   c) an ultraviolet optical signal.

6. The method of clause 2 or 3, wherein the indicator comprises an electrical load configured to emit infrared radiation when an electrical current is passed through it, and the method comprises:
receiving an infrared image of the battery system from the image capture device, the infrared image comprising a thermal image of the electrical load emitting the infrared radiation.

7. The method of any preceding clause, further comprising:
receiving, from a controller configured to selectively activate the first state of the battery cell, the unique ID associated with the battery cell in the first state.

8. The method of any preceding clause, wherein the unique ID associated with each battery cell is predetermined.

9. The method of any one of clauses 1 to 6, wherein the first signal is unique to its associated battery cell, and the method comprises:
receiving the unique ID associated with the battery cell in the first state from a predetermined mapping table, the predetermined mapping table associating the battery cell's unique ID to the battery cell's associated unique first signal.

10. The method of clause 1, wherein two or more of the plurality of battery cells within the battery system each comprise a receiver configured to receive a radio-frequency, RF, signal emitted from a transmitter at a fixed location relative to the battery system, and the first signal comprises a signal indicative of the strength of the RF signal received by a battery cell in the first state, the method comprising:

   receiving, from each one of the two or more battery cells, the signal indicative of the strength of the RF signal received at each one of the two or more battery cells in the first state;

   determining a relative position of the two or more battery cells based on the strength of the RF signal received at each one of the two or more battery cells.

11. The method of clause 10, wherein the unique ID associated with each battery in the first state is received from the associated battery.

12. The method of clause 10 or 11, further comprising:
determining the relative position of the two or more battery cells based on the strength of the RF signal received at each one of the two or more battery cells, and a known distance of separation between the transmitter and the battery system.

13. The method of clause 1, wherein the first signal comprises a radio-frequency, RF, signal, and two or more of the plurality of battery cells within the battery system each comprise a transmitter configured to emit the RF signal when the associated battery cell is in the first state, the method comprising:

   receiving the RF signal emitted from each one of the two or more battery cells when the associated battery cell is in the first state;

   determining a signal strength of each received RF signal; and

   determining a relative position of the two or more battery cells based on the determined signal strengths associated with the received RF signals.

14. The method of clause 13, wherein each received RF signal comprises information enabling the associated battery cell's unique ID to be determined, the method further comprising:

   determining the unique ID associated with the two or more battery cells, from the received RF signals; and

   associating the determined relative position of each one of the two or more battery cells with the associated battery cell's unique ID.

15. The method of clause 13 or 14, wherein one or more of the plurality of battery cells comprised in the battery system comprises a receiver configured to receive the RF signal emitted by a battery cell in the first state, the method comprising:

   determining the signal strength of each RF signal received at the one or more battery cells each comprising a receiver;

   aggregating the determined signal strengths to generate a relative signal strength map; and

determining the relative position of the two or more battery cells based on the relative signal strength map.

16. The method of clause 15, further comprising:
determining the relative position of the two or more battery cells based on a statistical analysis of the generated relative signal strength map.

17. The method of clause 13 or 14, wherein the RF signal emitted from each one of the two or more battery cells is received at a plurality of different receivers, each receiver being located at a different position relative to the battery system, the method further comprising:

determining the signal strength of the RF signal received by each receiver; and

determining the relative position of the two or more battery cells based on the determined signal strengths.

18. The method of clause 17, further comprising:

aggregating the determined signal strengths of the RF signals received by each receiver to generate a relative signal strength map; and

determining the relative position of the two or more battery cells based on the relative signal strength map.

19. The method of clause 17 or 18, wherein each one of the plurality of different receivers is comprised on a different battery cell.

20. The method of any preceding clause, wherein associating the determined position with the received unique ID of the battery cell in the first state further comprises:
recording the determined position in association with the received unique ID in a data store.

21. A processor for determining a position of a battery cell within a battery system comprising a plurality of battery cells, each battery cell having a unique identifier, ID, and each battery cell being configured to emit a first signal when in a first state, the first signal enabling the battery cell in the first state to be distinguished from the plurality of other battery cells comprised in the battery system, the processor being configured to:

receive a first signal associated with a battery cell in the first state;

receive the unique ID associated with the battery cell in the first state;

determine the position of the battery cell in the first state within the battery, based on the received first signal associated with the battery cell in the first state; and

associate the determined position with the received unique ID of the battery cell in the first state.

22. The processor of clause 21, configured to:

receive an image of the battery system captured from an image capture device, wherein one or more battery cells comprised within the battery system each comprise an indicator configured to emit the first signal when the associated battery cell is in the first state, the first signal comprises an electro-magnetic, EM, signal, and wherein the captured image comprises an image of the indicator emitting the EM signal associated with the battery cell in the first state; and

determine from the received image, the position of the battery cell in the first state relative to one or more other battery cells comprised within the battery system, based on a position of the indicator emitting the EM signal comprised in the received image.

23. The processor of clause 22, further configured to:
determine the position of the battery cell in the first state associated with the indicator emitting the EM signal comprised in the received image, by comparing the received image with a reference image of the battery system, the reference image comprising an image of the battery cell not in the first state.

24. The processor of clause 22 or 23, configured to:
receive an infrared image of the battery system captured by an infrared image capture device, the infrared image comprising an image of the indicator emitting an infrared signal when the associated battery cell is in the first state.

25. The processor of clause 22 or 23, configured to:
receive an image of the battery system comprising an image of the indicator emitting an optical signal when the associated battery is in the first state, the optical signal comprising any one of:

   a) an optical signal in the visible light spectrum;

   b) an infrared optical signal; or

   c) an ultraviolet optical signal.

26. The processor of clause 22 or 23, wherein the indicator comprises an electrical load configured to emit infrared radiation when currents is passed through the electrical load, and the processor is configured to:

   receive an infrared image of the battery system comprising a thermal image of infrared radiation emitted by the electrical load associated with the battery cell in the first state; and

   determine from the received infrared image, the position of the battery cell associated with the electrical load emitting the infrared radiation relative to one or more other battery cells comprised within the battery system.

27. The processor of any one of clauses 21 to 26, further configured to:
receive the unique ID associated with the battery cell in the first state from a controller configured to selectively activate the first state of the battery cell.

28. The processor of any one of clauses 21 to 27, wherein the unique ID associated with each battery cell is predetermined.

29. The processor of any one of clauses 21 to 26, wherein the first signal is unique to its associated battery cell, and the processor is further configured to:
receive the unique ID associated with the battery cell in the first state from a predetermined mapping table, the predetermined mapping table associating the battery cell's unique ID to the battery cell's associated unique first signal.

30. The processor of clause 21, further configured to:

   receive the first signal comprising a signal indicative of the strength of a radio-frequency, RF, signal received by each one of two or more battery cells in the first state within the battery system, each one of the two or more battery cells in the first state comprising a receiver configured to receive an RF signal emitted from a transmitter at a fixed location relative to the battery system; and

   determine a relative position of the two or more battery cells in the first state based on the strength of the RF signal received at each one of the two or more battery cells.

31. The processor of clause 30, wherein the processor is configured to obtain the unique ID associated with each battery cell in the first state from the associated battery cell.

32. The processor of clause 30 or 31, wherein the processor is further configured to:
determine the relative position of the two or more battery cells based on the strength of the RF signal received at each one of the two or more battery cells, and a known distance of separation between the RF transmitter and the battery system.

33. The processor of clause 21, further configured to:

   determine a signal strength of each radio-frequency, RF, signal received at an RF receiver located at a fixed location relative to the battery system, the RF receiver being configured to receive an RF signal transmitted from each one of two or more of the plurality of battery cells within the battery system, each one of the two or more battery cells comprising an RF transmitter and being configured to transmit an RF signal when in the first state; and

determine a relative position of the two or more battery cells based on the determined signal strengths associated with the received RF signals.

34. The processor of clause 33, wherein each received RF signal comprises information enabling the associated battery cell's unique ID to be determined, and the processor is further configured to:

determine the unique ID associated with the two or more battery cells, from the received RF signals; and

associate the determined relative position of each one of the two or more battery cells with the associated battery cell's unique ID.

35. The processor of clause 33 or 34, further configured to:

determine the signal strength of each RF signal received at two or more RF receivers, each RF receiver being associated with a different one of the plurality of battery cells comprised in the battery system, each RF receiver being configured to receive the RF signal transmitted by a battery cell in the first state;

aggregate the determined signal strengths to generate a relative signal strength map; and

determine the relative position of the two or more battery cells associated with the two or more RF receivers based on the relative signal strength map.

36. The processor of clause 35, further configured to:
determine the relative position of the two or more battery cells based on a statistical analysis of the generated relative signal strength map.

37. The processor of clause 33 or 34, further configured to:

determine a signal strength of the RF signal received by each one of two or more different RF receivers located at different positions relative to the battery system, each RF signal being emitted from a different one of the two or more of the plurality of battery cells within the battery system; and

determine a relative position of the two or more battery cells based on the determined signal strengths associated with the received RF signals.

38. The processor of clause 37, further configured to:

aggregate the determined signal strengths of the RF signals received by each receiver to generate a relative signal strength map; and

determine the relative position of the two or more battery cells based on the relative signal strength map.

39. The processor of clause 37 or 38, further configured to:
determine the signal strength of the RF signal received by each one of the two or more different RF receivers comprised on a different battery cell.

40. A battery management system comprising the processor of any one of clauses 21 to 39.

41. A computer program product comprising computer-executable instructions, which when executed on a processor configure the processor to carry out the method of any one of clauses 1 to 20.

42. A non-transitory storage device comprising computer-executable instructions, which when executed on a processor configure the processor to carry out the method of any one of clauses 1 to 20.

**Claims**

1. A method of determining a position of a battery cell within a battery system comprising a plurality of battery cells, each battery cell having a unique identifier, ID, and each battery cell being configured to emit a first signal when in a first state, the first signal enabling the battery cell in the first state to be distinguished from the plurality of other battery cells comprised in the battery system, the method comprising:

   receiving a first signal associated with a battery cell in the first state;
   obtaining the unique ID associated with the battery cell in the first state;
   determining the position of the battery cell in the first state within the battery system, based on the received first signal associated with the battery cell in the first state; and
   associating the determined position with the obtained unique ID of the battery cell in the first state.

2. The method of claim 1, wherein one or more battery cells comprised within the battery system each comprise an indicator configured to emit the first signal when the associated battery cell is in the first state, the first signal comprises an electro-magnetic, EM, signal, and the method further comprises:

   receiving an image of the battery system captured from an image capture device, the image comprising an image of the indicator emitting the EM signal associated with the battery cell in the first state; and
   determining from the received image, the position of the battery cell in the first state relative to one or more other battery cells comprised within the battery system, based on a position of the indicator emitting the EM signal comprised in the received image.

3. The method of claim 2, wherein the indicator is configured to emit an infrared signal when the associated battery cell is in the first state.

4. The method of claim 2, wherein the indicator comprises an optical device configured to emit an optical signal when the associated battery cell is in the first state, and the optical signal comprises any one of:

   a) an optical signal in the visible light spectrum;
   b) an infrared optical signal; or
   c) an ultraviolet optical signal.

5. The method of claim 2, wherein the indicator comprises an electrical load configured to emit infrared radiation when an electrical current is passed through it, and the method comprises:
   receiving an infrared image of the battery system from the image capture device, the infrared image comprising a thermal image of the electrical load emitting the infrared radiation.

6. The method of any preceding claim, further comprising:
   receiving, from a controller configured to selectively activate the first state of the battery cell, the unique ID associated with the battery cell in the first state.

7. The method of any one of claims 1 to 5, wherein the first signal is unique to its associated battery cell, and the method comprises:
   receiving the unique ID associated with the battery cell in the first state from a predetermined mapping table, the predetermined mapping table associating the battery cell's unique ID to the battery cell's associated unique first signal.

8. The method of claim 1, wherein two or more of the plurality of battery cells within the battery system each comprise a receiver configured to receive a radio-frequency, RF, signal emitted from a transmitter at a fixed location relative to the battery system, and the first signal comprises a signal indicative of the strength of the RF signal received by a battery cell in the first state, the method comprising:

   receiving, from each one of the two or more battery cells, the signal indicative of the strength of the RF signal received at each one of the two or more battery cells in the first state;
   determining a relative position of the two or more battery cells based on the strength of the RF signal received at each one of the two or more battery cells.

9. The method of claim 8, wherein the unique ID associated with each battery in the first state is received from the associated battery.

**10.** The method of claim 1, wherein the first signal comprises a radio-frequency, RF, signal, and two or more of the plurality of battery cells within the battery system each comprise a transmitter configured to emit the RF signal when the associated battery cell is in the first state, the method comprising:

receiving the RF signal emitted from each one of the two or more battery cells when the associated battery cell is in the first state;
determining a signal strength of each received RF signal; and
determining a relative position of the two or more battery cells based on the determined signal strengths associated with the received RF signals.

**11.** The method of claim 10, wherein each received RF signal comprises information enabling the associated battery cell's unique ID to be determined, the method further comprising:

determining the unique ID associated with the two or more battery cells, from the received RF signals; and
associating the determined relative position of each one of the two or more battery cells with the associated battery cell's unique ID.

**12.** The method of claim 10 or 11, wherein one or more of the plurality of battery cells comprised in the battery system comprises a receiver configured to receive the RF signal emitted by a battery cell in the first state, the method comprising:

determining the signal strength of each RF signal received at the one or more battery cells each comprising a receiver;
aggregating the determined signal strengths to generate a relative signal strength map; and
determining the relative position of the two or more battery cells based on the relative signal strength map; and optionally
further comprising:
determining the relative position of the two or more battery cells based on a statistical analysis of the generated relative signal strength map.

**13.** The method of claim 10 or 12, wherein the RF signal emitted from each one of the two or more battery cells is received at a plurality of different receivers, each receiver being located at a different position relative to the battery system, the method further comprising:

determining the signal strength of the RF signal received by each receiver; and
determining the relative position of the two or more battery cells based on the determined signal strengths.

**14.** A processor for determining a position of a battery cell within a battery system comprising a plurality of battery cells, each battery cell having a unique identifier, ID, and each battery cell being configured to emit a first signal when in a first state, the first signal enabling the battery cell in the first state to be distinguished from the plurality of other battery cells comprised in the battery system, the processor being configured to:

receive a first signal associated with a battery cell in the first state;
receive the unique ID associated with the battery cell in the first state;
determine the position of the battery cell in the first state within the battery, based on the received first signal associated with the battery cell in the first state; and
associate the determined position with the received unique ID of the battery cell in the first state.

**15.** The processor of claim 14, configured to:

receive an image of the battery system captured from an image capture device, wherein one or more battery cells comprised within the battery system each comprise an indicator configured to emit the first signal when the associated battery cell is in the first state, the first signal comprises an electro-magnetic, EM, signal, and wherein the captured image comprises an image of the indicator emitting the EM signal associated with the battery cell in the first state; and
determine from the received image, the position of the battery cell in the first state relative to one or more other battery cells comprised within the battery system, based on a position of the indicator emitting the EM signal comprised in the received image.

16. The processor of claim 15, configured to:
receive an infrared image of the battery system captured by an infrared image capture device, the infrared image comprising an image of the indicator emitting an infrared signal when the associated battery cell is in the first state.

17. The processor of claim 15, configured to:
receive an image of the battery system comprising an image of the indicator emitting an optical signal when the associated battery is in the first state, the optical signal comprising any one of:

a) an optical signal in the visible light spectrum;
b) an infrared optical signal; or
c) an ultraviolet optical signal.

18. The processor of claim 15, wherein the indicator comprises an electrical load configured to emit infrared radiation when currents is passed through the electrical load, and the processor is configured to:

receive an infrared image of the battery system comprising a thermal image of infrared radiation emitted by the electrical load associated with the battery cell in the first state; and
determine from the received infrared image, the position of the battery cell associated with the electrical load emitting the infrared radiation relative to one or more other battery cells comprised within the battery system.

19. The processor of any one of claims 14 to 18, further configured to:
receive the unique ID associated with the battery cell in the first state from a controller configured to selectively activate the first state of the battery cell.

20. The processor of claim 14, further configured to:

receive the first signal comprising a signal indicative of the strength of a radio-frequency, RF, signal received by each one of two or more battery cells in the first state within the battery system, each one of the two or more battery cells in the first state comprising a receiver configured to receive an RF signal emitted from a transmitter at a fixed location relative to the battery system; and
determine a relative position of the two or more battery cells in the first state based on the strength of the RF signal received at each one of the two or more battery cells.

21. The processor of claim 20, wherein the processor is further configured to:
determine the relative position of the two or more battery cells based on the strength of the RF signal received at each one of the two or more battery cells, and a known distance of separation between the RF transmitter and the battery system.

22. The processor of claim 14, further configured to:

determine a signal strength of each radio-frequency, RF, signal received at an RF receiver located at a fixed location relative to the battery system, the RF receiver being configured to receive an RF signal transmitted from each one of two or more of the plurality of battery cells within the battery system, each one of the two or more battery cells comprising an RF transmitter and being configured to transmit an RF signal when in the first state; and
determine a relative position of the two or more battery cells based on the determined signal strengths associated with the received RF signals.

23. The processor of claim 22 , further configured to:

determine the signal strength of each RF signal received at two or more RF receivers, each RF receiver being associated with a different one of the plurality of battery cells comprised in the battery system, each RF receiver being configured to receive the RF signal transmitted by a battery cell in the first state;
aggregate the determined signal strengths to generate a relative signal strength map; and
determine the relative position of the two or more battery cells associated with the two or more RF receivers based on the relative signal strength map.

24. The processor of claim 22, further configured to:

    determine a signal strength of the RF signal received by each one of two or more different RF receivers located at different positions relative to the battery system, each RF signal being emitted from a different one of the two or more of the plurality of battery cells within the battery system; and
    determine a relative position of the two or more battery cells based on the determined signal strengths associated with the received RF signals.

25. The processor of claim 24, further configured to:

    aggregate the determined signal strengths of the RF signals received by each receiver to generate a relative signal strength map; and
    determine the relative position of the two or more battery cells based on the relative signal strength map.

26. The processor of claim 24 or 25, further configured to:
    determine the signal strength of the RF signal received by each one of the two or more different RF receivers comprised on a different battery cell.

27. A computer program product comprising computer-executable instructions, which when executed on a processor configure the processor to carry out the method of any one of claims 1 to 14.

FIG. 1a
(Prior Art)

**FIG. 1b**
(Prior Art)

— 200

```
        ┌─────────┐
        │  Start  │
        └─────────┘
             │
             ▼
```

210 ──⌐ Receive a first signal associated with a battery cell in a first state

220 ──⌐ Obtain a unique ID associated with the battery cell in the first state

230 ──⌐ Determine a position of the battery cell in the first state within the battery system based on the received first signal associated with the battery cell in the first state

240 ──⌐ Associate the determined position with the received unique ID of the battery cell in the first state

```
        ┌─────────┐
        │   End   │
        └─────────┘
```

*FIG. 2*

**FIG. 3**

EP 4 050 696 A1

400

Start

410 — Obtain cell ID of cell in first state

420 — Receive image of battery system comprising cell in first state with active indicator

440 — Determine cell position from received image

450 — Match cell position with cell ID

460 — Additional cells to identify?    Yes

No

End

*FIG. 4*

**FIG. 5**

EP 4 050 696 A1

**FIG. 6**

EP 4 050 696 A1

**FIG. 7**

EP 4 050 696 A1

800

```
        ┌─────────┐
        │  Start  │
        └────┬────┘
             │
             ▼
┌──────────────────────────────────┐
│  Obtain cell ID for cell in      │  810
│  first state                     │
└────────────────┬─────────────────┘
                 │
                 ▼
┌──────────────────────────────────┐
│  Receive RF signal strength of   │  820
│  emitted RF signal               │
└────────────────┬─────────────────┘
                 │
                 ▼
         ◇ Have ID and RF signals
    No   associated with at least
◄──────  two different cells
         been received?  830
                 │ Yes
                 ▼
┌──────────────────────────────────┐
│  Determine relative cell position│  840
│  based on received RF signal     │
│  strength                        │
└────────────────┬─────────────────┘
                 │
                 ▼
┌──────────────────────────────────┐
│  Associate determined cell       │  850
│  position with cell's unique ID  │
└────────────────┬─────────────────┘
                 │
                 ▼
    860  ◇ Additional
         cell positions to be   Yes
         determined?  ──────────►
                 │ No
                 ▼
           ┌─────────┐
           │   End   │
           └─────────┘
```

*FIG. 8*

RSSI

FIG. 9

1000

Start

1010 — Obtain cell ID for cell in first state

1020 — Receive RF signal strength for cell in first state from each cell in "listen mode"

1030 — Have all cells been in first state?

No → New cell selected to be in first state

1035

Yes

1040 — Collate RF signal strength received at each cell in "listen mode"

1050 — Determine relative positions of cells from collated RF signal strength information

1060 — Associate each cell position with associated cell's unique ID

End

*FIG. 10*

RSSI

FIG. 11a

FIG.11b

RSSI

FIG. 11c

EP 4 050 696 A1

**FIG. 12**

**FIG. 13**

Europäisches
Patentamt

European
Patent Office

Office européen
des brevets

**EUROPEAN SEARCH REPORT**

Application Number

EP 21 15 9782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 218627 A1 (BOSCH GMBH ROBERT [DE]) 30 April 2020 (2020-04-30) * paragraph [0009] - paragraph [0027]; figure 2 * ----- | 1-27 | INV. H01M10/42 H01M10/48 |
| A | US 2019/242949 A1 (LEMKIN MARK ALAN [US] ET AL) 8 August 2019 (2019-08-08) * the whole document * ----- | 1-26 | |

TECHNICAL FIELDS
SEARCHED      (IPC)

H01M

The present search report has been drawn up for all claims

| Place of search | Date of completion of the search | Examiner |
|---|---|---|
| Munich | 1 October 2021 | Topalov, Angel |

EPO FORM 1503 03.82 (P04C01)

## ANNEX TO THE EUROPEAN SEARCH REPORT
## ON EUROPEAN PATENT APPLICATION NO.

EP 21 15 9782

This annex lists the patent family members relating to the patent documents cited in  the above-mentioned European search report.
The members are as contained in the European Patent Office EDP file on
The European Patent Office is in no way liable for these particulars which are merely given for the purpose of information.

01-10-2021

| Patent document cited in search report | Publication date | Patent family member(s) | | Publication date |
|---|---|---|---|---|
| DE 102018218627 A1 | 30-04-2020 | DE | 102018218627 A1 | 30-04-2020 |
| | | FR | 3087900 A1 | 01-05-2020 |
| US 2019242949 A1 | 08-08-2019 | CN | 109416389 A | 01-03-2019 |
| | | EP | 3475715 A1 | 01-05-2019 |
| | | JP | 2019527528 A | 26-09-2019 |
| | | US | 2019242949 A1 | 08-08-2019 |
| | | WO | 2018005631 A1 | 04-01-2018 |

EPO FORM P0459

For more details about this annex : see Official Journal of the European Patent Office, No. 12/82